Europäisches Patentamt

(19) European Patent Office

Office européen des brevets

(11) Publication number: **0 254 557**
**A2**

(12) # EUROPEAN PATENT APPLICATION

(21) Application number: **87306496.8**

(51) Int. Cl.⁴: **B 01 D 39/20**

(22) Date of filing: **22.07.87**

(30) Priority: **22.07.86 JP 172446/86**
**26.12.86 JP 313039/86**
**13.03.87 JP 59193/87**
**30.03.87 JP 77137/87**
**06.05.87 JP 110353/87**
**04.06.87 JP 140442/87**

(43) Date of publication of application:
**27.01.88 Bulletin 88/04**

(84) Designated Contracting States: **DE FR GB IT**

(71) Applicant: **NIPPONDENSO CO., LTD.**
**1, 1-chome, Showa-cho**
**Kariya-shi Aichi-ken (JP)**

(72) Inventor: **Yoshida, Hitoshi**
**16-4, Shimizuda Kakemachi**
**Okazaki-shi (JP)**

**Takeuchi, Yukihisa**
**42, Aza Gomuro Oaza Kusagi, Aguicho**
**Chita-gun, Aichi-ken (JP)**

**Miwa, Naoto**
**28, Ninowari Kabutocho**
**Tsushima-shi (JP)**

**Ito, Kazuyuki**
**24, Sakuramachi-4-chome**
**Nishio-shi (JP)**

**Ueda, Naoki**
**117-22, Kitsuneyama Yokonemachi**
**Obu-shi (JP)**

**Miura, Yasunao**
**96, Hachimancho**
**Kasugai-shi (JP)**

**Okamoto, Yasuhide**
**1-15-41, Meijo-2-chome**
**Kita-ku, Nagoya (JP)**

**Kondo, Hiroshi**
**28-5, Sawatari Takahamamachi**
**Takahama-shi (JP)**

**Sugiyama, Tomio**
**NIPPONDENSO Tennocho Shataku, 12**
**Tennocho-7-chome Kariya-shi (JP)**

(74) Representative: **Cook, Anthony John et al**
**D. YOUNG & CO. 10, Staple Inn**
**London, WC1V 7RD (GB)**

(54) **A porous structure and a process for production thereof.**

(57) A porous ceramic structure and an organic foam structure are disclosed having a cell structure with a three-dimensional network skeleton having internal communicating spaces, in which individual cells of said cell structure constituting said structure have a long and thin shape and the ratio of average major axis b to average minor axis a, b/a, of said cell is at least 1.5. A porous ceramic structure may be obtained by adhering a ceramic slurry to the surface of the skeleton of a long, thin resin foam stretched 120% or more and which is air-permeable and is burnt down by combustion, sintering said slurry into a ceramic layer at a high temperature, and simultaneously burning down the skeleton of said resin foam. In one embodiment, a porous ceramic structure is made up so that the ratio of average major axis b to average minor axis a, b/a, of said cell is larger in the peripheral portion of section of said structure than in its central portion. The disclosed structures are suitable for use in filters for collecting particulates contained in exhaust gas from diesel engines, in carriers for purifying exhaust gas by removing harmful gas components such as hydrocarbons, carbon monoxide, nitrogen oxides, etc. in exhaust gas, or in filters for purifying air.

FIG. I

x 1.0

EP 0 254 557 A2

**Description**

## A POROUS STRUCTURE AND A PROCESS FOR PRODUCTION THEREOF

This invention relates to porous structures suitable for use as filters.

Such filters include porous ceramic filters for collecting particulates contained in exhaust gas from diesel engines, or in carriers for purifying exhaust gas by removing harmful gas components such as hydrocarbons (HC), carbon monoxide (CO), nitrogen oxides (NOx), etc. in exhaust gas, and to a process for production thereof, as well as filters of a porous organic structure, particularly to various filters such as filters for purifying air, etc.

Porous ceramic structures have been investigated in order to remove the harmful substances exhausted from internal combustion engines, specifically particulates comprising carbon as the main constituent in exhaust gas from diesel engines, and harmful gases such as HC, CO, HOx, etc. in exhaust gas from gasoline engines. One example of porous structure for the former is proposed in Japanese Patent Application Kokai (Laid-Open) No. 161962/83, and that for the latter is proposed in Japanese Patent Application Kokai (Laid-Open) No. 57244/86.

The porous ceramic structure is characterized in that it permits the efficient collection of the above-mentioned particulates and the efficient reaction and removal of the harmful gases because it has a three-dimensional network skeleton, so that the exhaust gas is sufficiently diffused, resulting in collision of the exhaust gas with said skeleton.

However, the porous ceramic structures proposed in Japanese Patent Application Kokai (Laid-Open) No. 161962/83 or 57243/86 have a defect in that, since they permit sufficient diffusion of exhaust gas, a large pressure loss is caused.

In addition the following proposal is made in Japanese Patent Application Kokai (Laid-Open) No. 53242/82. A porous ceramic structure having a three-dimensional network skeleton for use as a catalyst carrier for purifying exhaust gas from automobiles, etc. is prepared so that the central portion of the cross-section of the porous ceramic structure is made of a porous material having a high apparent density, while the remaining, outer portion is made of a porous material having a low apparent density. The porous ceramic structure is attached, for example, to the exhaust pipe of automobile to reduce the flow rate of the exhaust gas passing through the center of the structure, whereby the flow rate distribution is reduced and the purifying function is improved.

However, when the central portion of the section of a porous ceramic structure is made of a porous material having a high apparent density, as proposed in Japanese Patent Application Kokai (Laid-Open) No. 53242/82, the pressure loss during flow of a fluid increases.

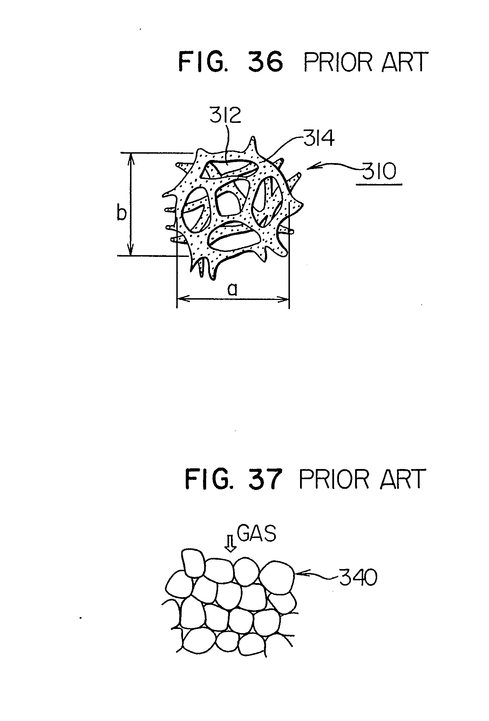

Furthermore, various means such as non-woven fabrics, filter paper, and porous plastics have previously been used as filters for air purification, etc. For example Japanese Patent Publication No. 752/66, discloses a reticulated organic foam (hereinafter referred to as a "foam filter") obtained by removing the cell walls from an organic foam (e.g., soft polyurethane foam) by alkali treatment, explosion treatment or the like to leave only the three-dimensional network skeleton. The resultant foam filter has a high porosity and air-permeability and is used for various purposes, for example, as a cushioning material, a kitchen cleaner, etc. The cell structure of this foam filter is shown in Fig. 36 of the accompanying drawings. The cell 310 constitutes a cell structure with a three-dimensional network skeleton 314 having internal communicating spaces 312, and its shape is a substantially spherical polyhedron (from dodecahedron to tetradecahedron) in which the ratio of the average major axis b to the average minor axis a, b/a, of the cell 310 is from 1.0 to 1.4. An aggregate of a large number of the cells 310 constitutes the foam filter.

The foam filter proposed in Japanese Patent Publication No. 752/66 has a high air-permeability, through in order to further reduce the pressure loss and improve the air-permeability, it proposes thinning the three-dimensional network skeleton 314 constituting the foam filter, or enlarging the interstices between the skeletons by increasing the average minor axis a of the cell 310. Although the skeleton 314 can be thinned to a certain extent depending on foam molding conditions, molding becomes difficult and the thinner the skeleton, the lower the strength. Also, the wider the interstices between the skeleton, the more unstable the foam filter. It is difficult to produce uniform and large cells 310, and increases of the average major axis b and the average minor axis a result in a deterioration of the foam filter in its function as a filter.

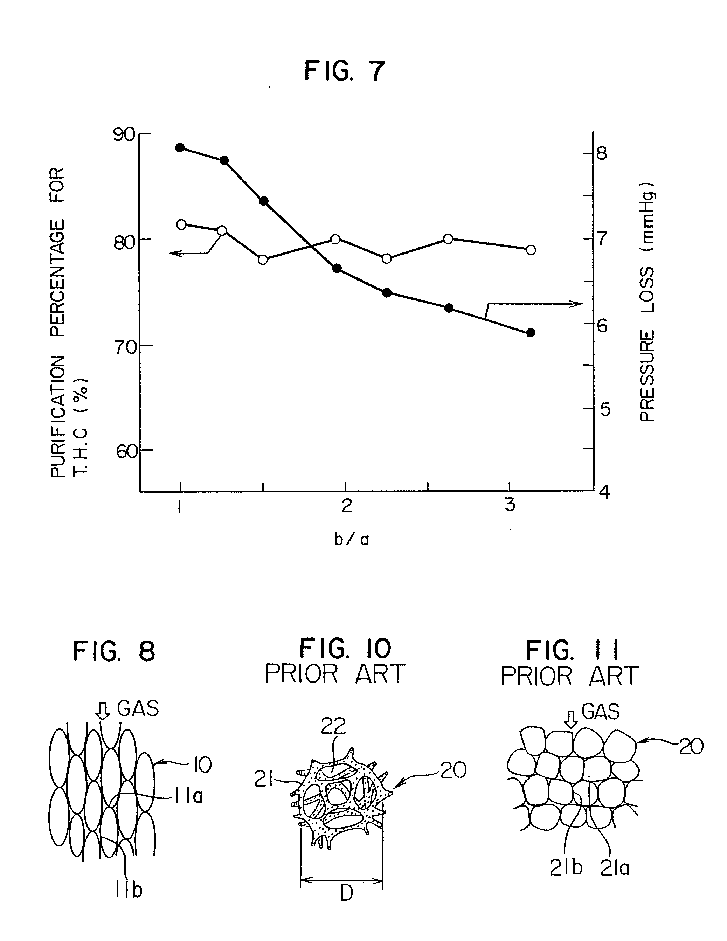

In detail, conventional ceramic structures, as shown in Fig. 9 of the accompanying drawings, have a cell structure with a three-dimensional network skeleton having communicating spaces. The fundamental unit of the structure is the polyhedral cell 20 (often from dodecahedron to tetradecahedron) described in Fig. 10 of the accompanying drawings, which is substantially spherical, and an aggregate of a large number of the cells constitutes the ceramic structure. Accordingly, the pressure loss can be reduced by increasing the diameter D of the cell 20 to enlarge the internal communicating spaces 22, but in this case, the distance between the skeletons 21 is increased. Therefore, the frequency of contact of exhaust gas with the skeleton 21 is lowered, so that the capability of collecting particulates and the reaction efficiency of the harmful gas are lowered.

Accordingly, in order to maintain the performance characteristics above a certain level, the ceramic structure should have a thickness larger than a certain thickness in relation to a certain size of the cell, and the pressure loss is eventually increased.

Thus, when a conventional ceramic structure is used, it is difficult to reduce the pressure loss greatly without lowering the collecting capability and the reaction efficiency of the harmful gas.

Furthermore, the conventional porous ceramic structures have been disadvantageous in that, since the exhaust gas diffuses into the structure, the pressure loss is increased.

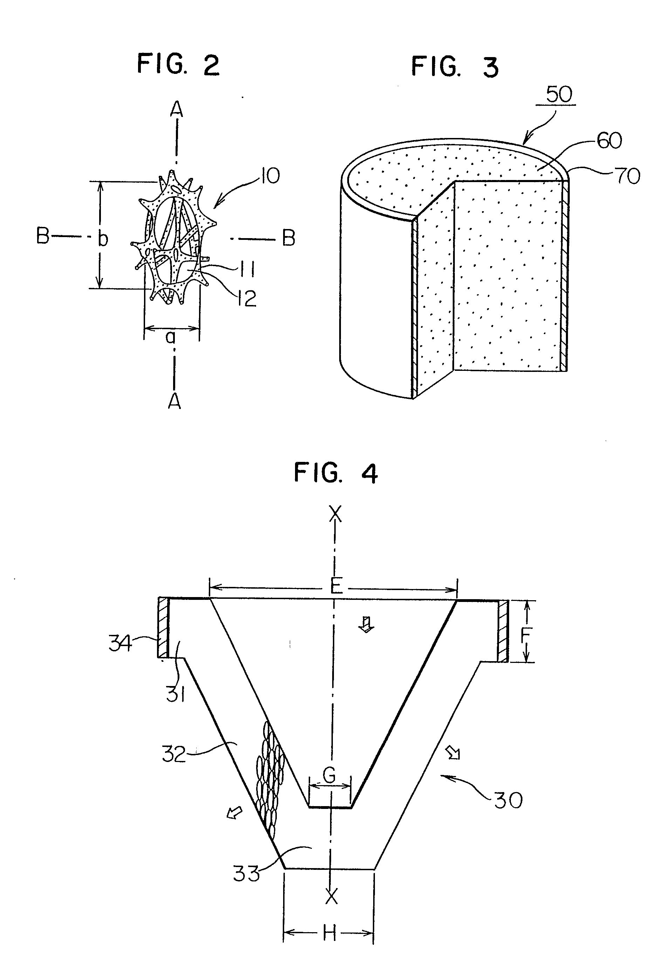

The present inventors have determined that the pressure loss may be reduced while maintaining the purifying capability, by imparting a long and thin shape to individual cells of the cell structure constituting the porous ceramic structure. In a preferred embodiment of the invention the ratio of average major axis b to the average minor axis a, b/a, in Fig. 2 of the accompanying drawings, is adjusted to be at least 1.5. However, in order to make the cell long and thin, a large cylindrical piece of resin foam should be stretched, so that a very large force is required. Moreover, it is not easy to stretch the whole resin foam uniformly, and such stretching has been a serious problem in producing a porous ceramic structure having cells of long and thin shape.

From a consideration of the problems noted above in relation to the various prior art structures, it will be appreciated that a need exists for a porous ceramic structure which has an improved purifying capability and which operates with a relatively small pressure loss. Similarly a need exists for an easier process for producing a porous ceramic structure having long and thin cells which operates with a relatively small pressure loss. In addition, a need exists for an organic foam filter arranged to operate with a greatly reduced presure loss, but without deterioration in its function as a filter.

According to one aspect of this invention there is provided a porous ceramic structure having a cell structure with a three-dimensional network skeleton having internal communicating spaces, in which the individual cells of said cell structure constituting said structure have a long and thin shape, and the ratio b/a of the average major axis b to the average minor axis a of said cell is at least 1.5.

According to another aspect of this invention, there is provided a porous ceramic structure having a cell structure with a three-dimensional network skeleton having internal communicating spaces, obtained by adhering a ceramic slurry to the surface of skeleton of a resin foam which is air-permeable and which can be burnt down by combustion, sintering said slurry into a ceramic layer at a high temperature, and simultaneously burning down the skeleton of said resin foam, said resin foam being a stretched resin foam of long and thin shape having a degree of stretching of 120% or more.

According to another aspect of this invention, there is provided a porous ceramic structure having a cell structure with a three-dimensional network skeleton having internal communicating spaces, wherein individual cells of said cell structure have a long and thin shape, and the porous ceramic stuctue is made up so that the ratio b/a of the average major axis b to the average minor axis a, of said cell is larger in a peripheral portion of the section of said structure than in a central portion.

According to another aspect of this invention, there is provided a porous organic structure having a cell structure with a three-dimensional network skeleton having internal communicating spaces, wherein individual cells of said cell structure constituting said organic foam have a long and thin shape, and the ratio b/a of the average major axis b to the average minor axis a of said cell is at least 1.5.

According to another aspect of this invention, there is provided a process for producing a porous ceramic structure which comprises the steps of:
stretching an air-permeable resin foam in one direction with a degree of stretching of 120% or more to obtain a stretched resin foam having a long and thin cell shape,
adhering a ceramic slurry to the surface of skeleton of said stretched resin foam, and
firing said stretched resin foam to sinter said ceramic slurry into a ceramic layer and burn down the skeleton of said stretched resin foam.

According to another aspect of this invention, there is provided a process for producing a ceramic structure, which comprises:
forming a resin foam into a plate,
stretching the plate of resin foam in one direction,
laminating the stretched resin foam plate to form a matrix having a three-dimensional network skeleton,
adhering a ceramic slurry of the surface of the matrix,
sintering said ceramic slurry and simultaneously burning down the skeleton of said matrix, and
thereby imparting, to cells constituting the ceramic structure, a long and thin shape having a ratio of the average major axis b to the average minor axis a, b/a, of at least 1.5.

The invention will now be described by way of example, reference being made to the accompanying drawings, in which:-

Fig. 1 is a photograph showing the cell structure of the porous ceramic structure according to an example of the present invention;

Fig. 2 is a partially enlarged schematic view of the cell structure shown in Fig. 1 or Fig. 25;

Fig. 3 to 5 are cross-sectional views showing the shape of one example of the porous ceramic structure of the present invention;

Figs. 6, 7, 19 and 20 are graphs for explaining the effects of various characteristics of examples of structures of the present invention;

Figs. 8 and 18 are schematic views of cell structure for illustrating the present invention;

Fig. 9 is a photograph showing the cell structure of a conventional porous ceramic structure;

Fig. 10 is a partially enlarged schematic view of the cell structure shown in Fig. 9;

Fig. 11 is a schematic view of a conventional cell structure for illustrating the present invention;

Figs. 12 (a) and (b) are a schematic view and a cross-sectional view both showing Example 5 of the present invention;

Fig. 13 is a graph showing the relationship according to depth of an end-face-reinforcing layer, air-permeation resistance, and end face strength;

Fig. 14 is a graph showing the relationship according to density of an end-face-reinforcing layer, air-permeation resistance, and end face strength;

Fig. 15 is a schematic view showing Example 8 of the present invention;

Fig. 16 is a graph showing the capability of Example 9;

Fig. 17 is a graph showing another example of the present invention;

Figs. 21 to 23 are schematic views showing the shape of the matrix of a ceramic structure produced by process in accordance with an embodiment of the present invention;

Fig. 24 is a cross-sectional view showing the shape of another example of porous ceramic structure produced by a process in accordance with an embodiment of the present invention;

Fig. 25 is a schematic view of the cell structure of the porous ceramic structure of an embodiment of the present invention;

Fig. 26 is a graph showing the relationship between the ratio b/a of average major axis b to average minor axis a, and pressure loss;

Fig. 27 is a schematic view showing one example of the porous ceramic structure of the present invention;

Fig. 28 is a graph showing the distribution of the ratio b/a in the porous ceramic structure shown in Fig. 27;

Fig. 29 is a diagram showing one example of the process for producing a porous ceramic structure of the present invention

Fig. 30 is a schematic view showing a method of testing a porous ceramic structure;

Fig. 31 is a graph showing the characteristics of various porous ceramic structures;

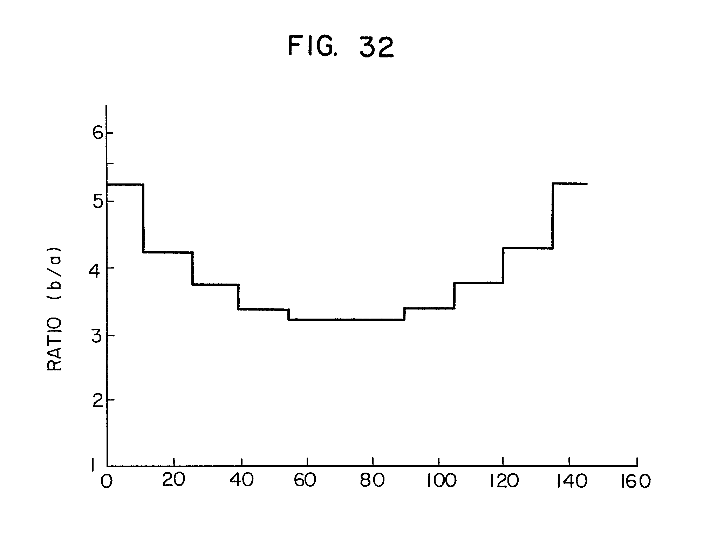

Fig. 32 is a graph showing the charcteristics of another Example;

Fig. 33 is a schematic view of the cell structure of the organic foam of an embodiment of the present invention;

Fig. 34 is a graph showing the relationship between the percentage of stretch and pressure loss;

Fig. 35 is a graph showing the relationship between the ratio of average major axis b to average minor axis a, b/a and pressure loss;

Fig. 36 is a partially enlarged schematic view of the cell structure of a conventional organic foam;

Fig. 37 is a schematic view of the cell structure of a conventional organic foam;

Fig. 38 (a) is a perspective view showing one embodiment of the porous ceramic structure of the present invention, and

Fig. 38 (b) is an axial sectional view thereof.

According to the described embodiments of this invention, the individual cells of a cell structure constituting a porous ceramic structure are formed into a long and thin shape, and if the average major axis of said long and thin cell is taken as b, and its average minor axis as a, the ratio b/a is adjusted to at least 1.5.

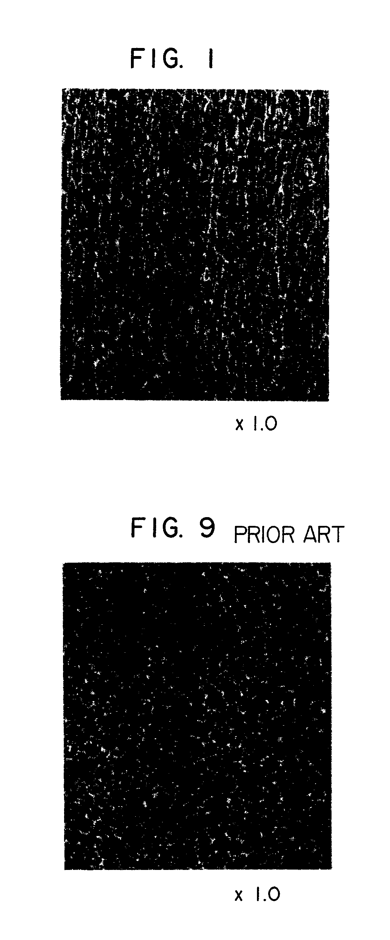

One example of the cell structure of the porous ceramic structure of this invention is shown in Fig. 1, and a sectional schematic illustration of its individual cell in Fig. 2. As is obvious from Fig. 1, the porous ceramic structure has a cell structure with a three-dimensional skeleton (the white portions in Fig. 1) having internal communicating spaces (the black portions in Fig. 1).

The individual cell, as shown in Fig. 2, is a long, thin, and nearly oval polyhedron (from dodecahedron to tetradecahedron), and the three-dimensional network skeleton 11 constitutes the edges of the polyhedron. The internal communicating spaces are shown by a symbol 12.

Here, the ratio of average major axis b in the major axis A-A direction to average minor axis a in the minor axis B-B direction b, b/a, is at least 1.5 as described above, preferably 1.5 to 6. When the above-mentioned ratio b/a is less than 1.5, said cell has a substantially spherical shape like conventional cells, so that no reducing effect on pressure loss can be expected. On the other hand, when the ratio b/a is 1.5 or more, a marked reducing effect on pressure loss can be obtained. However, the higher the ratio, the lower the strength of three-dimensional network skeleton. Therefore, for practical purposes, the ratio b/a is preferably 6 or less.

When the porous ceramic structure is used as the above-mentioned filter for collecting particulates or as a catalyst carrier, the average minor axis a of the above-mentioned cell is selected preferably in the range of 0.5 to 2 mm for practical purposes.

In use, for example when the porous ceramic structure is placed in the middle of an exhaust pipe of engine, it is oriented so that the major axis A-A of the above-mentioned cell (see Fig.2) is substantially parallel to the flow direction of exhaust gas in said exhaust pipe.

Suitable materials for the porous ceramic structure, include cordierite as well as alumina, mullite, β-spodumene, silicon nitride, silicon carbide, etc.

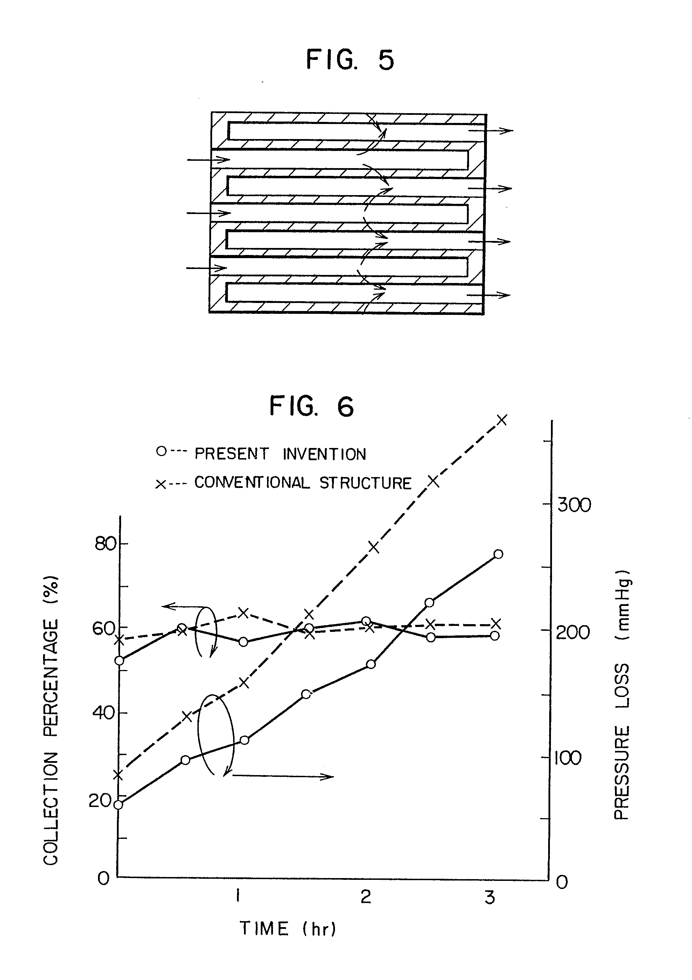

As the shape of the porous ceramic structure various shapes can be employed, for example a cylindrical shape as shown in Fig. 3, a conical shape as shown in Fig. 4, and a shape as shown in Fig. 5 in which many passageways for fluid are formed, and the inlet and outlet, respectively, of adjacent passageways are alternatively closed so as to allow a fluid flow from one passageway to another passageway with a partition between.

Although the process for producing the porous ceramic structure according to an embodiment of this invention is described hereinafter in detail, brief description thereof is given below.

A resin foam having a cell structure in which cells communicate with one another, is prepared by removing the cell wall. Said foam is heat-treated in an unidirectionally stretched state, whereby a stretched foam is obtained.

Thus, individual cells of the cell structure of the resin foam are changed in shape from a sphere to a nearly oval, long and thin shape.

Next, the resin foam is immersed in a ceramic slurry to adhere the ceramic slurry to the surface of three-dimensional network skeleton of the foam. The foam is dried and then fired at a high temperature to sinter said ceramic slurry into a ceramic layer and burn down the skeleton of the resin foam.

In a preferred embodiment, a polyurethane foam is used as the above-mentioned resin foam; various thermoplastic foams and thermosetting foams such as polyvinyl chloride foams, polyethylene foams, etc can also be used.

In the above example the cells of a resin foam, i.e. a starting material for the porous ceramic structure may be formed into a long and thin shape by subjecting the foam to heat distortion in an unidirectionally stretched state;

long and thin cells can be formed also by subjecting a resin foam to heat distortion in an undirectionally compressed state.

The porous ceramic structure can be used not only as a filter for collecting particulates exhausted from diesel engines and a catalytic material for removing harmful gas components in combustion exhaust gas as described above, but also as a filter medium for various gases or a filter medium for liquids.

In an embodiment of this invention, a porous ceramic structure is produced using a stretched resin foam having a degree of stretching of 120% or more, and individual cells of the porous ceramic structure are formed into a long and thin shape.

One example of the cell structure of the porous ceramic structure of this invention is shown in Fig. 1, and a sectional schematic illustration of its individual cell in Fig. 2. As is obvious from Fig. 1, the porous ceramic structure can have a cell structure with a three-dimensional skeleton (the white portions in Fig. 1) having internal communicating spaces (the black portions in Fig. 1).

Individual cells 10 of this cell structure can be obtained from a stretched resin foam having a degree of stretching of 120% or more. The term "degree of stretching" used herein means the percentage of the length in the major axis direction of cell after stretching based on the average cell diameter of the resin foam before stretching. That is to say, the individual cell 10 is a polyhedron (from dodecahedron to tetradecahedron), and the three-dimensional network skeleton 11 constitutes the edges of the polyhedron. The internal communicating space is shown by a symbol 12.

When the porous ceramic structure is used as a filter for collecting particulates or a catalyst carrier, the average cell diameter of the resin foam before stretching used for producing the porous ceramic structure is selected preferably in the range of 0.5 to 7 mm. Internal communicating space can satisfactorily be formed by adjusting the porosity from 75 to 95%.

Suitable materials for the porous ceramic structure include cordierite as well as alumina, mullite, β-spodumene, silicon nitride, silicon carbide, etc.

In using the porous ceramic structure activated alumina is formed on the surface of the ceramic skeleton 11 in order to improve the capability of removing carbon monoxide, nitrogen oxides, hydrocarbons, and the like contained in gas exhausted from the various combustion equipment used in automobiles, etc. In this case, the thickness of activated alumina on the surface is preferably 0.2 mm or less from the viewpoint of pressure loss, gas diffusion, etc.

When the porous ceramic structure is placed, for example, in the middle of an exhaust pipe of engine and used, for example, as a carrier for purifying exhaust gas, it is preferably placed so that the major axis A-A of the cell 10 (see Fig. 2) is substantially parallel to the flow direction of exhaust gas from said exhaust pipe. When the structure is used as a filter for collecting particulates, a satisfactory result can be obtained by placing it so as to make the major axis A-A perpendicular to gas flow.

As the shape of the porous ceramic structure various shapes can be employed, for example, a cylindrical shape as shown in Fig. 3, and a shape as shown in Fig. 5 in which many passageways for fluid are formed and the inlet and outlet, respectively, of adjacent passageways are alternatively closed so as to allow a fluid flow from one passageway to another passageway with a partition between.

Next, the outline of the process for producing a porous ceramic structure of an embodiment of this invention is given below.

By removing the cell wall, a resin foam is prepared having an average cell diameter of 0.5 to 7mm and a cell structure in which cells have been allowed to communicate with one another. The foam is stretched in only one direction and heat-treated in this stretched state to obtain a stretched resin foam having a degree of stretching 120% or more.

Thus, individual cells of the cell structure of the resin form is changed in shape for sphere to a nearly oval, long and thin shape.

Next, the resin foam is immersed in a ceramic slurry to adhere the ceramic slurry to the surface of three-dimensional network skeleton of the foam. The foam was dried and then fired at a high temperature to sinter said ceramic slurry into a ceramic layer and burn down the skeleton of the resin foam.

In a preferred embodiment a polyurethane foam is used as the above-mentioned resin foam, through various thermoplastic foams and thermosetting foams such as polyvinyl chloride foams, polyethylene foams, etc. can also be used.

The porous ceramic structure can be used not only as a filter for collecting particulates exhausted from diesel engines and a catalytic material for removing harmful gas components in combustion exhaust gas as described above, but also as a filter medium for various gases or a filter medium for liquids.

Furthermore, the following product process is employed. A resin foam having a three-dimensional network skeleton is formed into a thin plate, after which the opposite edges of the thin plate are fixed and the thin plate is held in a unidirectionally stretched state. The thin plate is then treated with a chemical agent or the like to form a resin foam plate in which individual cells have been stretched into a long and thin shape. Subsequently, this resin foam plate is cut into pieces of an optional length, which are then laminated, for example, by rolling one piece or placing several pieces one upon another, into the shape of a desired structure, whereby a matrix having a three-dimensional network skeleton is obtained. A ceramic slurry is adhered to the surface of skeleton of the matrix. By means of a high-temperature atmosphere, the ceramic slurry is sintered into a ceramic layer and at the same time, the skeleton of the matrix is burnt down, whereby there is produced a porous ceramic structure composed of cells of long and thin shape in which the ratio of average major axis b to average minor axis a, b/a, is at least 1.5.

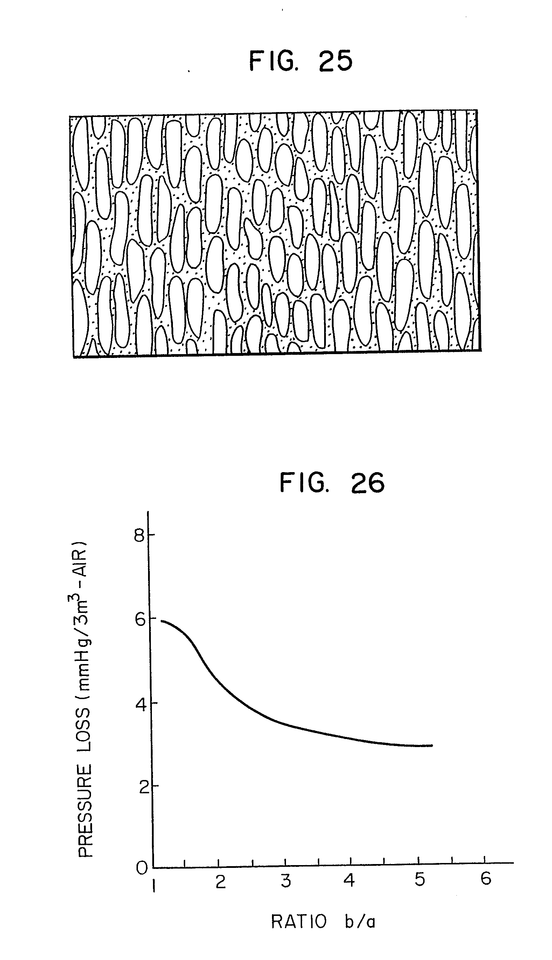

A part of the cell structure of the porous ceramic structure is shown in Fig. 25, and a sectional schematic illustration of its individual cell in Fig. 2. The porous ceramic structure has a cell structure with a three-dimensional network skeleton having internal communicating spaces. The individual cell 10 of the cell structure is a long and thin, rearly oval polyhedron (from dodecahedron to tetradecahedron), and the three-dimensional network skeleton 11 constitutes the edges of the polyhedron. The internal communicating spaces are shown by a symbol 12.

Firstly, using porous ceramic structures which had the geometry: diameter 107 mm, length 80 mm, and were different from one another in the ratio of average major axis b to average minor axis a, b/a, we investigated the relationship between the ratio b/a and pressure loss.

The pressure loss was measured by passing air through each of the aforesaid ceramic stuctures in the direction of its cylinder axis. The measurement was carried out at an air flow rate of 3 $m^3$/min while preventing air from flowing from the side of the cylinder. The measurement results are shown in Fig. 26.

From Fig. 26, we found that when the ratio of average major axis b in the major axis A-A direction to average minor axis a in the minor axis B-B direction, b/a, of cells constituting the ceramic structure was more than 1.5, the pressure loss is reduced with an increase of the ratio b/a as compared with conventional porous ceramic structures whose cells were substantially spherical (the ratio b/a being about 1 to about 1.4).

In consideration of these results, there is employed in an embodiment of this invention a technical means which does not comprise changing the apparent density of ceramic structure but comprises adjusting the ratio of average major axis b to average minor axis a, b/a, of the central portion of section forming the porous portion of a porous ceramic structure, so as to increase the ratio with an increase of the distance from the central portion in the direction of the periphery.

The present invention has been made in further consideration of the points described above. In an embodiment of this invention, individual cells of a cell structure constituting a foam filter are formed into a long and thin shape, and the ratio of average major axis b to average minor axis a, b/a, of said long and thin cell is adjusted to at least 1.5.

A partially enlarged schematic view of the cell structure of the organic foam of an embodiment of this invention is shown in Figure 2.

The individual cell 10 of the cell structure having a three-dimensional network skeleton having internal communicating spaces is, as shown in Fig. 2, a long and thin, nearly oval polyhedron (from dodecahedron to tetrahedron), and the three-dimensional network skeleton 11 constitutes the edges of the polyhedron. The internal communicating spaces are shown by a symbol 12.

Here, the oval shape of said cell 10 is such that the ratio of average major axis b in the major axis B-B direction to aveage minor axis a in the minor axis A-A direction, b/a, of the cell 10 is adjusted to at least 1.5. Although the ratio of average major axis b to average minor axis a, b/a, is at least 1.5, it is preferably in the range of 1.5 to 6. When the ratio b/a is less than 1.5, the cell 10 has a substantially spherical shape, like conventional cells, so that no reducing effect on pressure loss can be expected. However, even in the case of a conventional cell in which the ratio b/a is 1.4, when the flow direction of a fluid is allowed to coincide with the diameter direction b of the cell, a reducing effect on pressure loss is brought about as compared with the case where the flow direction of a fluid is allowed to coincide with the minor axis a. But, by forming cells so as to adjust the ratio b/a to 1.5 or more, pressure loss can be reduced very greatly as compared with conventional cells. On the other hand, the larger the ratio b/a, the narrower the interstices between the skeletons 22a in the flow direction of a fluid and the more difficult the attainment of a reducing effect on pressure loss. Therefore, the ratio b/a is preferably 6 or less for practical purposes.

Although the process for producing the organic foam filter of an embodiment of this invention is described hereinafter in detail, a brief description thereof is given below.

A cellular organic material, namely, an organic foam is prepared and then reticulated by alkali treatment, heat treatment, or the like. The reticulated organic foam (hereinafter referred to as "the foam") thus obtained is a conventional product.

In this invention, this form is heat-treated in a mechanically and unidirectionally stretched state, whereby the conventional foam is stretched. In the manner described above, the shape of individual cells constituting the cell structure of the foam is changed from a spherical to a nearly oval, long and thin shape. The individual cells can be kept in a nearly oval, long and thin shape by coating or curing the resin of skelton of the cells by treatment with a chemical agent such as cyaroacrylate, polyester or the like instead of heat treatment. For stretching the foam, there may be employed not only a mechanical method but also, for example, a method which comprises swelling foam in only one direction vaporizing the solvent to retract the foam only in a direction perpendicular to the fixing direction, and thereby stretching the foam. Although in the methods described above, the structure is obtained by distorting a conventional foam, it is also possible to form long and thin cells by controlling materials for the organic foam and various foaming conditions. However, in the case of the method comprising merely distorting and stretching a conventional foam, individual cells can be given a nearly oval, long and thin shape more easily and stably, and the ratio b/a can easily be adjusted so as to be large.

In a preferred embodiment of this invention, the above-mentioned organic foam is a polyurethane foam through various foams such as polyvinyl chloride foam, polystyrene foams, etc. can be used, so long as they can be stretched.

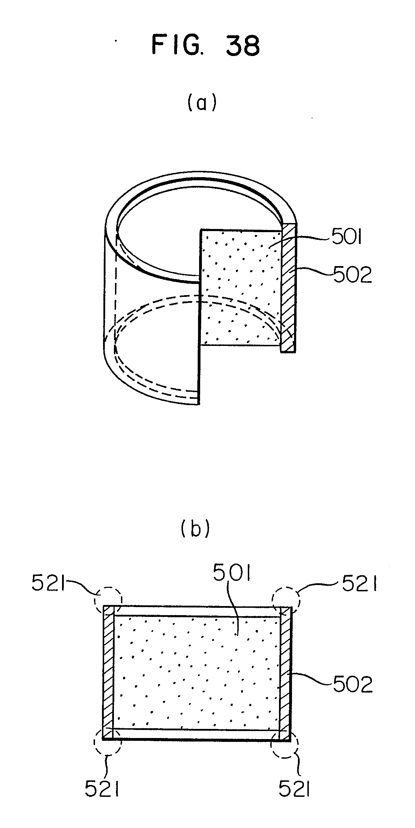

In Fig. 38 (a) and (b) is described one embodiment of the present invention in which by preventing a direct load on the skeleton portion (the foam portion) having a three-dimensional network structure, damage to the end face of the skeleton is prevented, for example, when the structure is handled or pressed into a retaining case.

In detail, as shown in Fig. 38, the skin portion 502 composed of a dense ceramic layer surrounding the periphery of the foam portion 501 having a skeleton structure is made longer than foam portion 501.

The end 521 of said skin portion 502 juts out beyond the end face of the foam portion 501.

When a structure having the constitution described above is placed softly on a smooth pedestal, direct contact of the pedestal surface with the structure is always limited to the skin portion 502, and the foam portion 501 does not come in contact with the pedestal surface.

Therefore, in usual handlings such as placing the structure on the pedestal or lifting the structure from the pedestal, an instaneous impact load at the time of the handling is always received by the skin portion 502 having a high strength, so that a load on the end of skeleton of the foam portion 501 can be avoided.

When the structure is fixed in a retaining case used for equipping a practical automobile or the like with the structure, the structure is pressed into the case under a high load of hundreds kilograms in order to allow the case to exhibit a sufficient retaining ability against external forces such as vibration and gas pressure after fixing the case. In this case, it becomes possible to apply a load at the time of pressing the structure into the case only to the skin portion 502 on the periphery without applying the same to the end of skeleton of the foam portion 501, so that damage to the end of skeleton can be presented.

A conceptual illustration of the cell structure of a porous ceramic structure according to an embodiment of this invention is as shown in Fig. 8, and that of a conventional porous ceramic structure is as shown in Fig. 11. When it is assumed that a fluid moves forward linearly, the fluid is disturbed by skeletons which are substantially perpendicular to the flow of the fluid.

When Fig. 8 is compared with Fig. 11, it can be understood that in the case of the cell structure having long, thin and rearly oval cells 10 as shown in Fig. 8, the frequency of disturbance of a fluid by the skeleton 11a is lower than the frequency of disturbance of a fluid caused in the case of the cell structure having nearly spherical cells 20 as shown in Fig. 11.

Since pressure loss is caused by inertia force and viscosity which hinder a fluid, reduction of the disturbance of a fluid results in reduction of inertia force and hence reduction of pressure loss.

On the other hand, as can be seen from Fig. 8, the cell 10 has a long and thin shape, so that there exists a skeleton 11b which is dimensionally long in the flow direction of fluid. Therefore, a fluid flows along the above-mentioned dimensionally long skeleton 11b which is substantially parallel to the flow direction of the fluid, and hence the probability of the contact between the fluid and the skeleton increases. Consequently, the performance characteristics as a filter or the purifying capability is maintained, as a whole, substantially at their conventional levels.

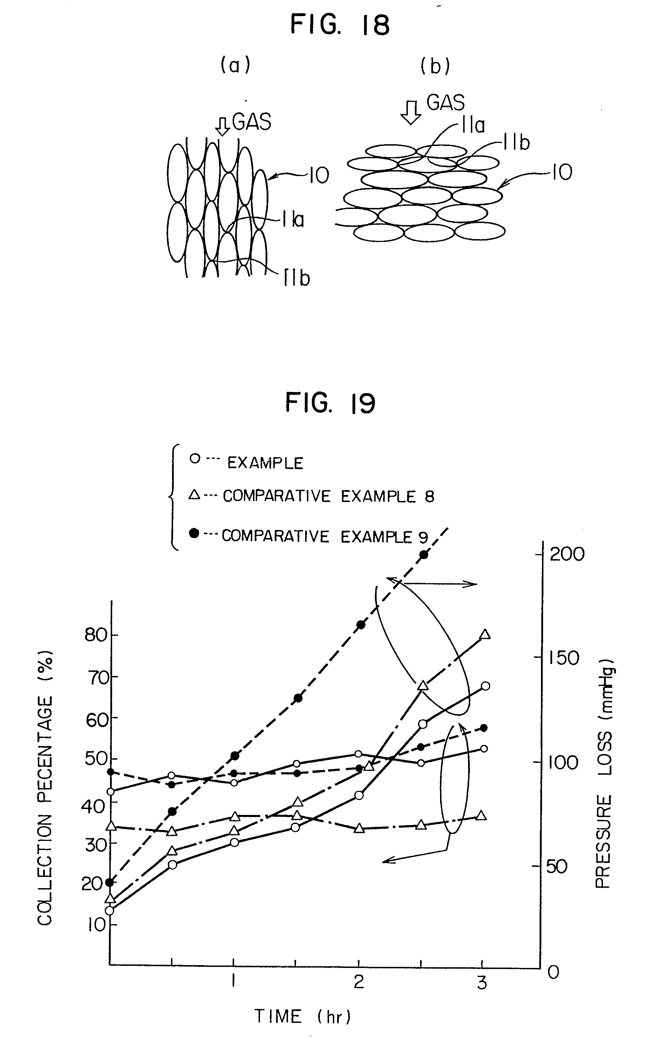

A conceptual illustration of the cell structure of the porous ceramic structure according to an embodiment of this invention is as shown in Fig. 18 (a) and (b), and that of a conventional porous ceramic structure is as shown in Fig. 11. When it is assumed that a fluid moves forward linearly, the fluid is disturbed by skeletons which are substantially perpendicular to the flow of the fluid.

When Fig. 18 is compared with Fig. 11, it can be understood that in the case where the major axis A-A (see Fig. 2) of the long, thin and nearly oval cell 10 shown in Fig. 18 (a) is made substantially parallel to gas flow, the frequency of disturbance of the fluid by the skeleton 11a of the cell 10 is lower than the frequency of disturbance of the fluid caused in the case of the cell structure 20 shown in Fig. 11 which has nearly spherical cells 20.

Since pressure loss is caused by inertia force and viscosity which hinder a fluid, reduction of the disturbance of a fluid results in reduction of inertia force and hence reduction of pressure loss.

On the other hand, as can be seen from Fig. 18 (a), the cell 10 has a long and thin shape, so that there exists a skeleton 11b which is dimensionally long in the flow direction of fluid. Therefore, a fluid flows along the above-mentioned dimensionally long skeleton 11b which is substantially parallel to the flow direction of the fluid, and hence the probability of the contact between the fluid and the skeleton increases. Consequently, the performance characteristics as a filter or the pyrifying capability is maintained, as a whole, substantially at their conventional levels.

In the case where the major axis A-A (see Fig. 2) is made substantially perpendicular to the flow direction of a fluid, the number of ceramic skeletons in the plane perpendicular to gas is decreased when it is assumed that the number of skeletons 11b is the same as that of conventional skeletons 21a. As a result, the collecting efficiency is slightly lowered but an excellent reducing effect on pressure loss can be obtained.

By use of the previously explained technical means based on this invention, for example, when the porous ceramic structure is attached to an exhaust pipe of automobile, exhaust gas which passes through the center of the porous ceramic structure is somewhat decreases in flow rate because of a somewhat large pressure loss, so that the difference between the flow rates in the central portion and the peripheral portion is reduced. Therefore, the purifying capability can be improved, and since cells constituting the porous ceramic structure are oval, pressure loss can be reduced as compared with conventional porous ceramic structures.

The reason why pressure loss can be reduced is as follows. When it is assumed that a gas passes linearly through a cylindrical ceramic structure, the higher the ovalness of cell, the lower the probability of disturbance of gas particles by the skeletons of cells which are perpendicular to gas flow. That is to say, since pressure loss is caused by inertia force and viscosity which hinder the gas, the higher the ovalness of cell, the lower the frequency of collision of the gas with the skeleton of cell. Therefore, reduction of the disturbance of the gas results in reduction of inertia force and hence reduction of pressure loss.

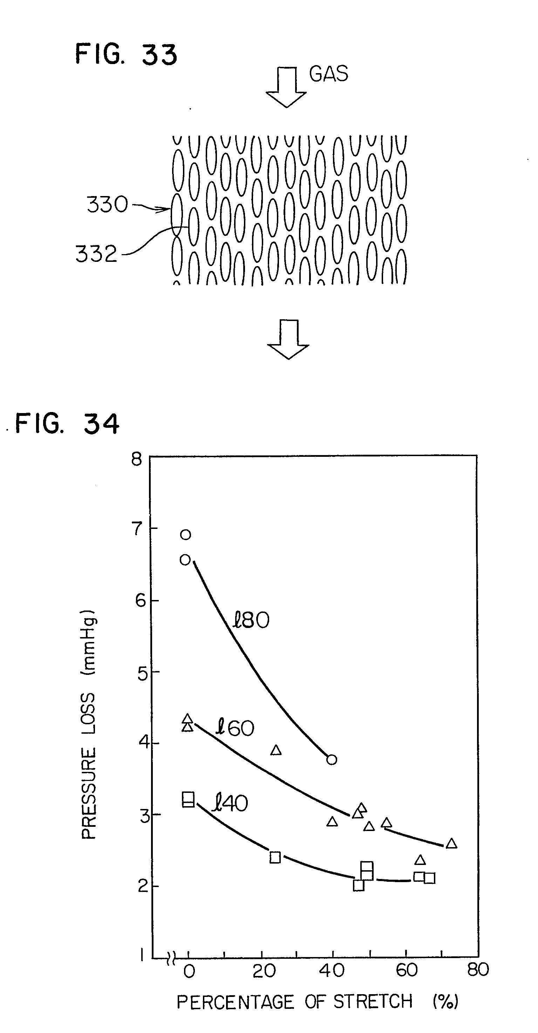

A conceptual illustration of the cell structure of the foam filter according to an embodiment of the invention is shown in Fig. 33 and that of a conventional foam filter is as shown in Fig. 37. When it is assumed that a fluid moves foward linearly, the fluid is disturbed by the skeletons which are substantially perpendicular to the flow of the fluid.

When Fig. 33 is compared with Fig. 37, it can be understood that in the case of the cell structure having long, thin, and nearly oval cells 330 as shown in Fig. 33, the frequency of disturbance of a fluid by the skeleton 332 is lower than the frequency of disturbance of a fluid caused in the case of the cell structure having nearly spherical cells 340 as shown in Fig. 37.

Since pressure loss is caused by inertia force and viscosity which hinder a fluid, reduction of the disturbance of a fluid results in reduction of inertia force and hence reduction of pressure loss.

On the other hand, as can be seen from Fig. 2, owing to the stretching, the interstices 12 between the skeletons are enlarged in the stretching direction, but since the foam shrinks in a direction perpendicular to the stretching direction, the interstices in said direction is the same as or smaller than those before the stretching. Therefore, the performance characteristics as a filter are maintained substantially at their conventional levels.

The present invention will now be further explained below in more detail with reference to the following non-limiting Examples.

Example 1

A cylindrical porous ceramic structure was prepared having the geometry: diameter 100 mm, length 40 mm. The major axis A-A (see Fig. 2) was allowed to coincide with the cylinder axis. The ceramic material was cordierite ceramics.

The ratio b/a of length b in the major axis A-A direction to length a in the minor axis B-B direction of the polyhedron was 1.9 on average, and the length a was 1.7 mm on average.

Next, a process for producing this ceramic structure is described below.

A bulk of polyurethane foam having communicating cells free from cell walls was prepared and the heat-treated in a unidirectionally stretched state. The polyurethane foam used here had an average cell diameter D (see Fig. 10) of 2 mm. The conditions for the above-mentioned heat treatment were 150°C for 30 minutes. The percentage of stretch of the polyurethane foam obtained by the heat treatment was about 180%, and the shape of cell was similar to that shown in Fig. 2 and is as follows: b/a = 1.9 (on average), and a = 1.8 mm (on average).

The polyurethane foam thus obtained was formed into a cylinder having a diameter of about 100 mm and a length of about 40 mm. The direction of the major axis of cell was allowed to coincide with that of the cylinder axis.

Subsequently, this polyurethane foam was impregnated with a ceramic slurry, and the surplus slurry was removed by means of an air gun or a centrifuge, after which the polyurethane foam was dried at 50° to 80°C and fired at 1000° to 1300°C for about 7 hours to obtain a porous ceramic structure having a three-dimensional network structure. Here, the material for the slurry was mixed powder containing magnesium oxide (MgO), alumina ($Al_2O_3$) and silica ($SiO_2$) which forms cordierite on sintering, or a mixture prepared by heating the aforesaid mixed powder to make the same into cordierite ceramic, pulverizing the cordierite ceramic to obtain synthetic cordierite powder, and stirring and mixing this powder with 5 to 10 wt% of a binder such as methyl cellulose, polyvinyl alcohol or the like, 2 to 3 wt% of a surfactant, a dispersant, etc. and 50 to 100 wt% of water.

As Comparative Examples, according to the process described in Example I, there were produced a porous ceramic structure which was the same as in Example I, except that the direction of the minor axis of cell was allowed to coincide with the cylinder axis (Comparative Example 1), and another porous ceramic structure having a conventional structure in which cells were not distorted (Comparative Example 2). Both of them had the geometry: diameter 100 mm, length 40 mm. In Comparative Example 1, b/a = 1.0 (on average) and a = 1.7 mm (on average). In Comparative Example 2, average cell diameter D = 1.9 mm.

Next, air was passed through each porous ceramic structure in the direction of the cylinder axis and pressure loss was measured. The measurement was carried out at an air flow rate of 3 m³/min while preventing air from flowing from the side to the cylinder. As a result, the values of pressure loss shown in Table 1 were obtained.

Table 1

|  | The present invention | Comparative Example 1 | Comparative Example 2 |
|---|---|---|---|
| Pressure loss (mmHg) | 14.1 | 21.2 | 17.8 |

Example 2

There were prepared two cylindrical porous ceramic structures having the geometry: diameter 130 mm, length 80 mm. One structure (an embodiment of the present invention) had long and thin cells, in which b/a was 1.8 on the average and a was 0.8 mm on the average. The other structure (a conventional structure) had the cells shown in Fig. 10 with an average cell diameter D of 0.8 mm.

Each of these structures was set as a filter in the middle of the exhaust pipe of a diesel engine of 2.2 liters displacement, and its capability of collecting particulates exhausted from the engine was evaluated. The engine conditions were 2,000 r.p.m. x 6 kg•m. The collection percentage η was determined by measuring the degree of blacking before and behind the filter $K_f$ and $K_r$, respectively, by means of a smoke meter, followed by calculation by the equation:

$$\eta = \frac{K_f - K_r}{K_f}$$

Pressure loss was determined by measuring the difference between pressures before and behind the filter by means of a mercury manometer. The results obtained are shown in Fig. 6. As shown in Fig. 6, the collecting efficiently was hardly lowered, but pressure loss was greatly reduced.

Example 3

In the same manner as in Example 1, there were produced ceramic structures having the geometry: diameter 100 mm, length 20 mm, which had a fixed value of the length a of 1.5 mm on average and various ratios b/a. Further, 30 g of activated alumina was adhered to the skeleton of each ceramic structure. The coating with activated alumina was conducted in the following manner. A coating liquid was prepared by adding water to a mixture of 10 to 30 wt% of alumina sol, 20 wt% of aluminum nitate, and the balance of $\gamma\text{-}Al_2O_3$. The ceramic structures were impregnated with the coating liquid, and the surplus liquid was removed, after which the ceramic structures were dried and then fired under the conditions of 750°C for 1 hour.

Next, a method for supporting a noble metal catalyst on the structure coated with γ-alumina is explained below. The coated structure was immersed in a 1 to 3 wt% aqueous solution containing chloroplatinic acid ($H_2PtCl_6•6H_2O$) and rhodium chloride ($RhCl_3•3H_2O$) in the ratio of 7:3 by weight in terms of metal, and water was lightly removed from the structure, after which the structure was heat-treated at 700°C for about 10 minutes, whereby 0.2 g in total of Pt-Rh mixed catalyst was supported on the structure.

Each of the catalytic materials produced in the manner described above was attached to the exhaust pipe of a gasoline engine of 2,000 cc displacement, and the concentration of total hydrocarbon (T.H.C.) in exhaust gas was measured. The gas temperature at the inlet to the catalytic material was 400°C. Pressure loss was determined by passing air through the catalytic material at a rate of 3 m³/min.

The relationship between pressure loss and purification percentage for T.H.C. is shown in Fig. 7. Even when the ratio b/a was varied, the purifying capability was substantially constant. On the other hand, pressure loss was reduced when the ratio b/a was 1.5 or more. Since the ratio b/a is 1.0 to 1.2 in conventional ceramic structures, this embodiment of the present invention brings about a great reducing effect on pressure loss.

Example 4

The catalytic material 30 shown in Fig. 4 was produced using the ceramic structure of Example 3 having a ratio b/a of 1.8. The catalytic material 30 had a maximum diameter of 100 mm and a length of 80 mm. Its other dimensions E,F,G and H are shown in Fig. 4. E is 70 mm, F is 20 mm, G is 12 mm and H is 25 mm. The catalytic material 30 has a U-shape, and exhaust gas was passed therethrough in direction of arrow. The catalytic material 30 was composed of an edge wall 31, a conical side wall 32 and a side wall 33. The major axis of cell was parallel to the axis of the catalytic material X-X and the thickness of the side wall 32 was 20 mm. A dense cordierite layer 34 of 2 mm in thickness was formed on the periphery of the U-shaped edge wall 31. Each wall had 100 g in total of activated alumina adhered thereto and 0.8 g in total of noble metal catalyst (Rh/Pt = 3/7) supported thereon.

The catalytic material 30 was subjected to performance assessment under the same conditions as in Example 3 to find that it was a satisfactory catalytic material as follow:
Purification percentage for T.H.C. 91%
Pressure loss (3 m$^3$/min air) 4.0 mmHg

As is evident from the above Examples of the porous ceramic structures of the present invention, it is possible to reduce pressure loss greatly while maintaining the collecting efficiency and the purifying capability substantially at their conventional levels. The reason for this is as follows.

An explanation is given with reference to Example 3. When it is assumed that a gas passes linearly through a catalytic material having a length of 20 mm, 13 cells are present in the gas's course in the case of a conventional ceramic structure, while only 6 cells are present therein in the case of a ceramic structure in which b/a = 2.2 as in one example of the present invention. To put it simply, in Fig. 8 and Fig. 11, gas particles are disturbed 13 times by skeletons 21a substantially perpendicular to gas flow in the case of a conventional ceramic structure, while they are disturbed 6 times by skeletons 11a in one example of the present invention. That is to say, this indicates that the disturbance of gas in the case of a conventional skeleton is reduced in one example of the present invention. From the fact that pressure loss is caused by inertia force and viscosity which hinder gas, it is natural that reduction of the disturbance of gas should result in reduction of inertia force and hence reduction of pressure loss.

On the other hand, the reason for the maintenance of the purifying capability is that in Fig. 8, the proportion of gas flow along skeleton 11b parallel to gas flow is increased. In other words, in the case of a conventional ceramic structure, a large number of skeletons 21a substantially perpendicular to gas flow exist, so that gas is distrubed, resulting in high probability of the contact of gas with skeletons 21a and 21b in the lower course of gas flow. In one example of the present invention, although gas is not so greatly disturbed as in the case of a conventional ceramic structure, skeleton 11b which is dimensionally long in the flow direction of gas is present in the gas's course, so that the probability of the contact of gas with skeleton 11b is increased, and after all, the purifying capability is maintained in total.

That is to say, in the case of a conventional ceramic structure, the attainment of a certain purifying capability is accompanied by excessive disturbance of gas, resulting in a much greater disadvantage in pressure loss.

This relation applies also to the filter of Example 2. Since the probability of the collision of gas with the skeletons is maintained in total, the collecting capability is maintained at its conventional level.

Example 5

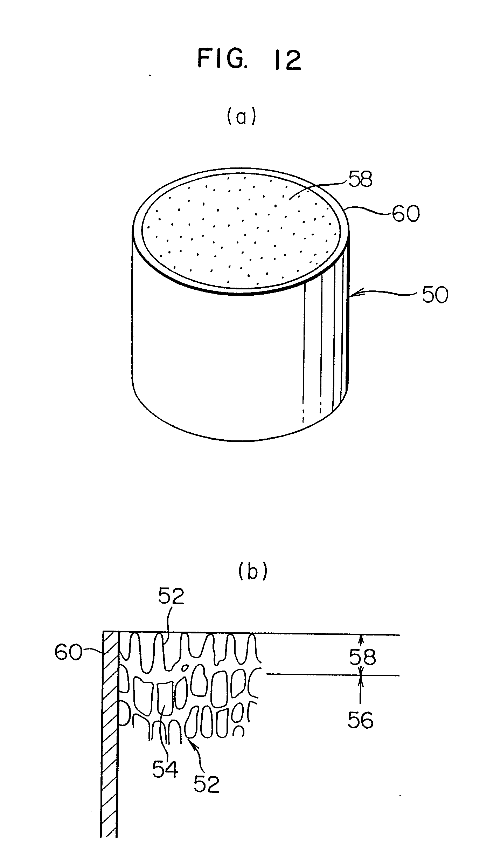

In Example 5, as shown in Fig. 12 (a) and (b), in a cylindrical porous ceramic structure 50 having the geometry: diameter 107 mm, length 78 mm, the shape of cell is given so as to adjust the b/a to 3.5 on average and the length a to 3.5 mm on average. The ceramic structure 50 had a porous portion 56, end-face-reinforcing layers 58 formed at both ends thereof, and a periphery-reinforcing layer 60 for reinforcing the peripheral portion of the ceramic structure 50.

The end-face-reinforcing layer 58 had a density (0.35 g/cc) higher than the density (0.25 g/cc) of cell of the porous portion 56. The thickness of the end-face-reinforcing layer 58 was about 10 mm.

The periphery-reinforcing layer 60 had a thickness of about 2 mm, was composed of dense ceramic, and was provided on the outer periphery of the ceramic structure 50.

Here, a process for producing the ceramic structure of Example 5 is described below. In the same manner as in Example 1, the shape of the cells of polyurethane foam in Example 5 was made similar to that shown in Fig. 2 in which b/a = 3.4 (on average) and a = 3.5 (on average).

The material for the slurry may be: mixed powder containing magnesium oxide (MgO), alumina (Al$_2$O$_3$) and silica (SiO$_2$) which forms cordierite on sintering; synthetic cordierite powder prepared by heating the aforesaid mixed powder to make the same into cordierite ceramic, and pulverizing cordierite ceramic; or a mixture prepared by adding to a mixture of them a binder such as methyl cellulose, polyvinyl alcohol or the like and water. The aforesaid polyurethane foam was impregnated with this slurry, after which the surplus slurry was removed by means of an air gun or a centrifuge. Then, the polyurethane foam was dried in a drying oven at 80° to 120°C for 2 to 3 hours. The above-mentioned procedures from the impregnation to the drying were repeated 2 or 3 times to adhere a required amount of the ceramic slurry to the surface of skeleton of the foam.

Next, the periphery-reinforcing layer 60 and the end-face-reinforcing layers 58 were formed. Although either of them may be formed first, the periphery-reinforcing layer 60 was formed first herein.

The periphery-reinforcing layer 60 was formed on the peripheral portion of the polyurethane foam having, as described above, ceramic adhered to the skeleton, by coating a slurry made of the same materials as those for the above-mentioned slurry on said peripheral portion to a thickness of 2 mm by use of a brush, and then drying the foam in a drying oven at 80° to 120°C for 2 to 3 hours.

Then, the end-reinforcing layer 58 was formed by impregnating only the 10 mm end of the above-mentioned polyurethane foam having ceramic adhered thereto, with the aforesaid slurry, removing the surplus slurry remaining in the communicating voids of the skeletons of foam, for example, by means of an air gun or a centrifuge to increase the ceramic density in the end portion, and then drying the foam in a drying oven at 120°C for 30 minutes.

After the formation of the periphery-reinforcing layer 60 and the end-face-reinforcing layers 58 on both ends, the polyurethane foam was subjected to firing treatment at a firing temperature of 1300° to 1470°C for 5 to 6 hours to obtain the porous ceramic structure of Example 5.

The reinforcement of the ends or periphery of the ceramic structure 50 brought about the following advantageous effects. In the case of conventional ceramic structures, since their cells are oval, their end faces are very weak. Therefore, when such a ceramic structure is pressed into a case, a load at the time of pressing into a case is applied to the ends of the ceramic structure, and when the ceramic structure is attached to an automobile, ceramic near the end faces is chipped off owing to strong vibration caused by engine, etc. By virtue of the above-mentioned reinforcement, there could be obtained a porous ceramic structure which can prevent the chipping-off of ceramic near the end surfaces, reduce pressure loss, and retain the purification percentage.

Example 6

There is described below another example in which end-face-reinforcing layers were formed in a porous ceramic structure.

On the end faces of a polyurethane foam having a periphery-reinforcing layer obtained in exactly the same manner as in Example 5, a ceramic slurry composed of the same components as in Example 5 whose viscosity had been adjusted to about 1000 cps was spray-coated to a density of 0.35 g/cc and a thickness of about 10 mm by means of a spray gun for high viscosity. Then, the polyurethane foam was dried in a drying oven at 120°C for 30 minutes. In exactly the same manner as in Example 5, except for the above-mentioned procedure, a porous ceramic structure having end-face-reinforcing layers was obtained.

Example 7

In consideration of improvement of the strength and case of the influx of exhaust gas (air-permeation resistance), the depth of end-face-reinforcing layer and the optimum range of density were determined as follows.

First, in ceramic structures having the geometry: diameter 107 mm, length 78 mm, in which the length a was 3.5 mm on average, the ratio b/a was 3.1, and the density of porous portion was 0.25 g/cc, the density of end-face-reinforcing layers was fixed at 0.35 g/cc and the depth of these end-face-reinforcing layers was varied so as to be 3, 5, 10, 15, 20 or 25 mm. These ceramic structures were named Samples 1 to 6, respectively. As comparative Example 3, a ceramic structure having no end-face-reinforcing layer was named Sample 7. The air-permeation resistance and the strength of end face of each ceramic structure were measured.

The air-permeation resistance was measured by passing air through each support at a rate of 3 $m^3$/min at room temperature, and measuring the difference between the pressures before and behind the support.

The strength of end face was measured by placing an iron cylinder having a diameter of 10 mm on the end face of each ceramic structure, applying a pressure to this cylinder, measuring a load on the end face immediately before the end face was chipped off, and defining the value of this load as the value of the strength of end face.

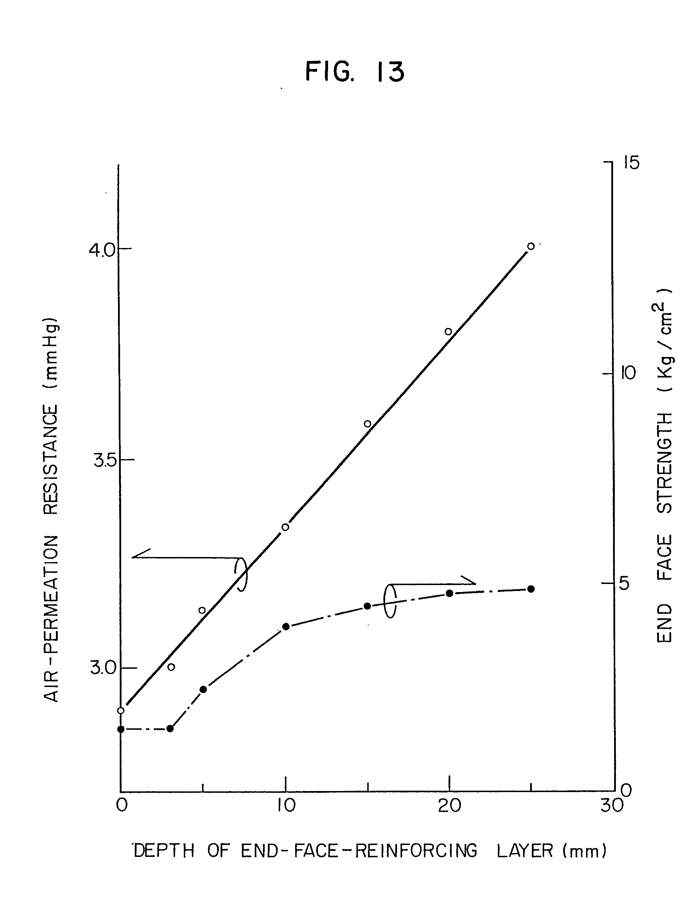

In Fig. 13 are shown the relationships between the depth of end-face-reinforcing layer and air-permeation resistance, and between the depth of end-face-reinforcing layer and the strength of end face.

It can be seen from Fig. 13, that the smaller the depth of end-face-reinforcing layer, the lower the air-permeation resistance, and that the larger the depth of end-face-reinforcing layer, the higher the strength of end face. From these facts, the depth of end-face-reinforcing layer is preferably not more than 25 mm and not less than 3 mm which is a numerical value range satisfying both the air-permeation resistance and the strength of end face. At a value below this numerical value range, the strength of end face can hardly be improved, while at a value above this numerical value range, the increase of the air-permeation resistance is disadvantageously larger than that of the strength of end face.

However, it is apparent that the value of the depth of end-face-reinforcing layer may be beyond the above numerical value range when an increase of the air-permeation resistance at this value is allowable.

When the shape of a porous ceramic structure is other than one which has the geometry: diameter 108 mm, length 78 mm, the optimum depth of end-face-reinforcing layer should be changed depending on change in the length of the ceramic structure because needless to say, the proportion of an increase of pressure loss caused by the formation of end-face-reinforcing layers depends on the proportion of the depth of the end-face-reinforcing layer to the length of the ceramic structure. From these facts, the optimum depth range of the end-face-reinforcing layer is preferably about 32% or less of the length of the ceramic structure.

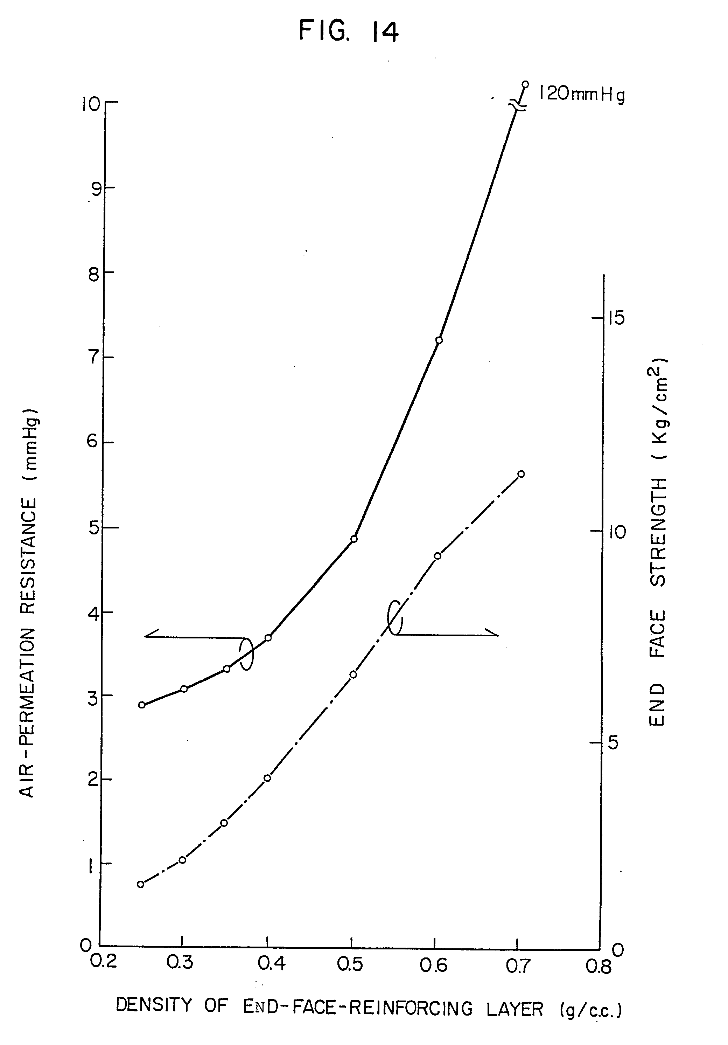

Next, in ceramic structures having the geometry: diameter 107 mm, length 78 mm, in which the length a was 3.5 mm on the average, the ratio b/a was 3.1, and the density of porous portion was 0.25 g/cc, the density of end-face-reinforcing layer was adjusted to 10 mm and the ceramic density of end-face-reinforcing layer to 0.3 g/cc, 0.35 g/cc, 0.40 g/cc, 0.50 g/cc, 0.60 g/cc or 0.70 g/cc. These ceramic structures were named Sample Nos. 8 to 13. In Fig. 14 are shown the relationships between the density of end-face-reinforcing layer and air-permeation resistance, and between the density of end-face-reinforcing layer and the strength of end face, for each ceramic structure. The air-permeation resistance and the strength of end face were measured in exactly the same way as described above.

As is obvious from Fig. 14, the strength of end face and the air-permeation resistance increase with an increase of the ceramic density of end-face-reinforcing layer. However, when the density of end-face-reinforcing layer is 0.7 g/cc, the proportion of increase of the air-permeation resisntace is larger than that of the strength of end face. From these facts, it was found that the density of end-face-reinforcing layer in the porous ceramic structure of Example 6 was preferably 0.7 g/cc or less.

Since the proportion of increase of the air-permeation resistance or that of the strength depends on the ratio of the density of end-face-reinforcing layer to the density of the porous portion, the density of end-face-reinforcing layer is preferably 2.8 times or less that of the porous portion from the above results.

As to the ranges of particularly optimum depth and density of end-face-reinforcing layer, the depth is 6 to 20% of the length of a ceramic porous structure, and the density is 1.1 to 1.4 times that of the porous portion.

Example 8

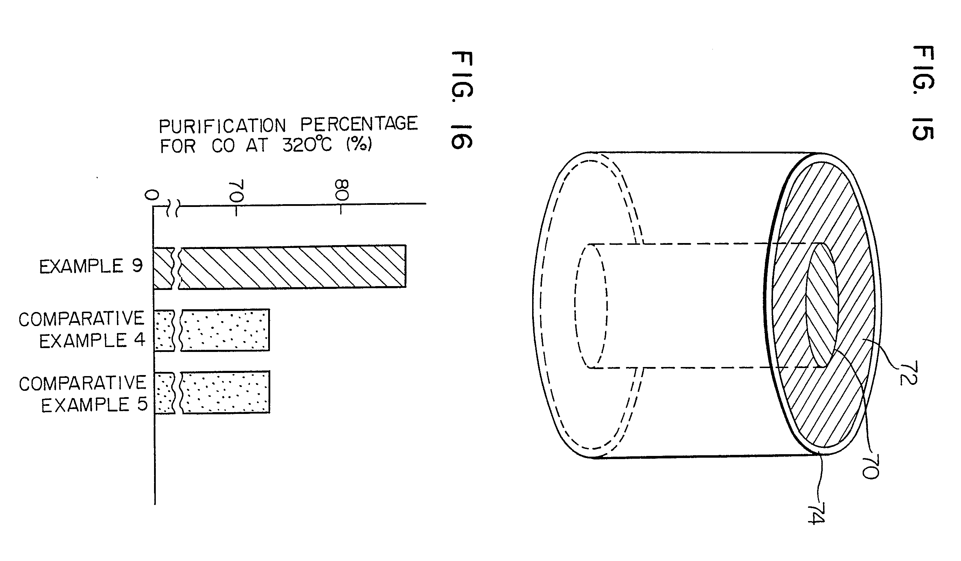

There was prepared the porous ceramic structure shown in Fig. 15 which had a cylindrical shape with the geometry: diameter 107 mm, length 80 mm. The porous portions 70 and 72 had the long and thin cell structure shown in Fig. 2, the ratio b/a was about 2.9 on average, the length a was about 3.5 mm on average, and the major axis A-A of cell (see Fig.2) was allowed to coincide with the axis of said structure. The porous portion 70 had a diameter of about 40 mm and a ceramic density of 0.2 to 0.3 g/cm³. The porous portion 72 had a ceramic density of 0.2 g/cm³. On the outer periphery, a dence ceramic layer of 2 mm in thickness was formed as a periphery-reinforcing layer 74.

A process for producing the porous ceramic structure of Example 8 is described below.

First, in exactly the same manner as in Example 1, there was obtained a polyurethane foam whose cells had a shape similar to that shown in Fig. 2, in which b/a = 1.9 (on average) and a = 36 mm (on average).

This polyurethane foam was molded, immersed in the same ceramic slurry as in Example 1 to adhere a predetermined amount of the ceramic slurry to the surface of three-dimensional network skeleton of the polyurethane foam, and then dried. Further, the ceramic slurry was poured into the central portion having a diameter of about 40 mm to be adhered in a predetermined amount. Then, the polyurethane foam was dried. Subsequently, a periphery-reinforcing layer 74 was formed in the same manner as in Example 5, after which the polyurethane foam was dried and then fired at about 1350°C for about 7 hours, whereby there could be obtained a porous ceramic structure in which the porous portion 70 in the central portion had a higher ceramic density than did the porous portion 72.

As comparative examples for Example 8, there were prepared a porous ceramic structure of Comparative Example 4 which had a conventional cell structure (see Fig. 10) and in which the whole porous portion had the same ceramic density of 0.2 g/cm³, and a porous ceramic structure of Comparative Example 5 which had a conventional cell structure (see Fig. 3) and in which the density of the central portion having a diameter of about 40 mm was 0.3 g/cm³ and that of the other portion was 0.2 g/cm³. The geometries of Comparative Examples 4 and 5 were the same as that of Example 8. The shapes of cell of Comparative Examples 4 and 5 were similar to that shown in Fig. 10 and were such that b/a = about 1.3 (on average) and a = about 4.8 mm (on average).

Next, pressure loss was measured by passing air through each of the porous ceramic structures of Example 8 and Comparative Examples 4 and 5 in the direction of the cylinder axis. The measurement was carried out at an air flow rate of 3 m³/min while preventing air from flowing from the side to the cylinder. As a result, pressure loss in Comparative Example 4 was 5.9 mmHg and that in Comparative Example 5 was 6.8 mmHg. On the other hand, pressure loss in Example 8 was 4.9 mmHg which was less than those in Comparative Examples 4 and 5 by about 20 to about 30%.

Example 9

There were evaluated performance characteristics as catalyst carrier of the ceramic structure obtained in Example 8.

Comparative Example 6 or Comparative Example 7 was a porous ceramic structure having long and thin cells obained in exactly the same manner as in Example 1, and their density was adjusted to 0.2 g/cm for Comparative Example 6 or 0.3 g/cm³ for Compartive Example 7.

On each of the porous ceramic structures obtained as Example 9 and Comparative Examples 6 and 7 was supported 0.85 g in total of Pt-Rh mixed catalyst in exactly the same manner as in Example 3, except that 60 g of activated alumina was adhered to the skeleton of each ceramic structure.

Each of the catalytic materials produced in the manner described above was attached to the exhaust pipe of a gasoline engine of 2,000 cc displacement, and the concentration of carbon monoxide (CO) in exhaust gas was measured. In this case, the gas temperature at the inlet to the catalytic material was 320°C.

In Fig. 16 are shown the measurement results of purifying capabilities of each porous ceramic structure obtained for Example 9 and Comparative Example 6 and 7, respectively. As is obvious from Fig. 16, by adjusting the density of the central portion to 0.3 g/cm³ and that of the other portion to 0.2 g/cm³, the purifying capability could be greatly improved as compared with Comparative Example 6 in which the density of the whole portion was 0.2 g/cm³ and Comparative Example 7 in which the density of the whole portion was 0.3 g/cm³.

By adjusting, as described above, the density of a cylindrical porous ceramic structure having long and thin cells, so as to be higher in the central portion and lower in the other portion, there could be obtained an excellent porous ceramic structure having the following advantages. When this structure as attached, for example, to an exhaust pipe of automobile, the flow rate of exhaust gas passing through the central portion of the structure is somewhat lowered, so that the flow rate distribution is narrowed, resulting in improvement of the purifying capability. Moreover, since the shape of cell is long and thin, pressure loss is small.

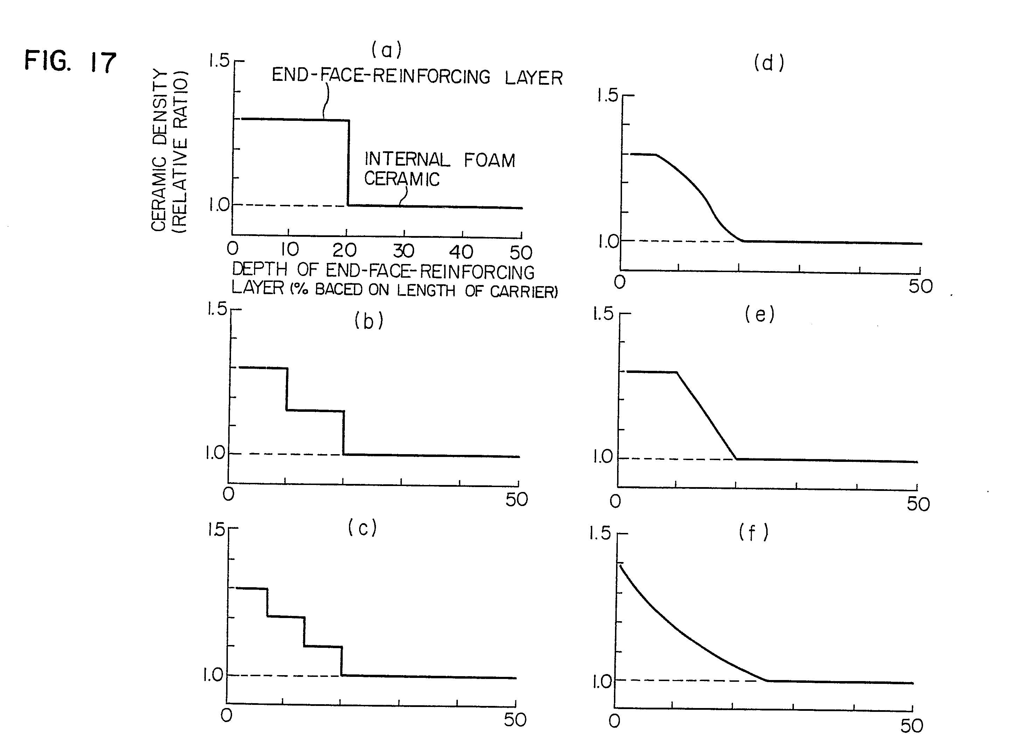

Although in Examples 5 and 6, the ceramic density in end-face-reinforcing layer was made uniform as in Fig. 17 (a), the density may be varied stepwise or continuously in relation to depth in such a way that as shown in Fig. 17 (b) to (f), the smaller the distance from end face, the higher the density. By virtue of the above variation of the density, when a stress such as vibration is applied the stress is distributed, so that the skeleton in the end face can be prevented more effectively from being chipped off.

Although methods for forming an end-face-reinforcing layer on the porous ceramic structure of an embodiment of this invention was described in Examples 5 and 6, there may be employed another method which comprises coating a ceramic slurry on the end face by means of a brush so as to attain an optional depth, and then removing the surplus slurry by means of an air gun.

Although the same slurry as used in the porous portion was used as a slurry for forming an end-face-reinforcing layer on the porous ceramic structure, there may, of course, be used a ceramic slurry composed of different materials.

Although in Examples 5 and 6, end-face-reinforcing layers were formed after adhering a ceramic slurry to the whole polyurethane foam, it is also possible to adhere a ceramic slurry to the whole polyurethane foam after adhering the ceramic slurry so as to attain a depth which is that of an end-face-reinforcing layer to be formed.

Although in the above Examples, end-face-reinforcing layers were formed on both ends of the ceramic structure, the formation thereof on both end faces is not always necessary, and it is also possible to form an end-face-reinforcing layer only on one end face which requires its formation.

For example, when at the time of pressing the ceramic structure into a case, only end face on the inlet side is pushed, the porous ceramic in the end face can be prevented from being chipped off at the time of pressing the ceramic structure into a case, also by forming the above-mentioned end-face-reinforcing layer only on the inlet side on which force is applied.

Although in Examples 8 and 9, the density was varied while keeping the porous portion in one-body state, it is also possible to obtain a porous ceramic structure by previously forming organic foams for the central portion and the peripheral portion respectively, varying the density of each foam, thereafter placing the organic foams one upon another, and firing the resulting assembly.

Although in Examples 8 and 9 above, the amount of ceramic slurry adhered to the organic foam was varied in order to densify the central portion it is also possible to make the density of the central portion higher than that of the peripheral portion by making the cell diameter D of an organic foam in the central portion different from that in the peripheral portion.

For example, it is also possible to form a central, high-density portion 1 and a peripheral, low-density portion 2 by forming an organic foam having a cell diameter D of about 3 mm and an organic foam having a cell diameter D of about 5 mm as their respective starting materials into long and thin cell structures individually, and placing the thus formed products one upon another as in Example 2. As compared with the product obtained by use of the starting material having a cell diameter D of about 3 mm, the product obtained by use of the starting material having a cell diameter D of about 3 mm has so much the higher cell density, and therefore the central portion of the resulting structure is denser than the peripheral portion.

Although in Examples 8 and 9, the porous portion was divided into two portions, i.e., the central portion and the peripheral portion, the porous portion may, of course, be a multilayer, in which layers may be successively varied.

It is also possible to use as a filter the resin foam described in Example 1 which was used as a starting material.

Example 10

A perspective view of a porous ceramic structure 50 of an embodiment of the present invention is shown in Figure 3. In Example 10, there was prepared a cylindrical porous ceramic structure having the geometry: diameter 100 mm, length 80 mm. The major axis A-A (see Fig. 2) of cell 10 constituting the porous portion 60 was allowed to coincide with the cylinder axis. The ceramic material used was cordierite ceramic.

The outer peripheral portion of the porous ceramic structure, of Example 10 had a dense wall 70 of 1.5 mm in thickness made of cordierite ceramic.

Next, a process for producing said ceramic structure is shown below.

A bulk of polyurethane foam, which was a resin foam having communicating pores free from cell walls, was prepared and then heat-treated in a unidirectionally stretched state. The polyurethane foam used herein had an average cell diameter of 3.2 mm. The conditions for the above-mentioned heat treatment were 150°C for 30 minutes. The degree of stretching of the stretched polyurethane foam, i.e., the stretched resin foam obtained by the head treatment was about 145%, and the shape of its cell was similar to that shown in Fig. 2.

The stretched polyurethane foam thus obtained was formed into a cylinder having a diameter of about 100 mm and a length of about 81 mm. The direction of major axis of the cell was allowed to coincide with that of the cylinder axis.

Then, this stretched polyurethane foam was impregnated with a ceramic slurry which had been prepared so as to have cordierite composition. After the surplus slurry was removed by means of an air gun or a centrifuge, the stretched polyurethane foam was dried at 50° to 80°C. Then, the utmost periphery of the polyurethane foam was coated with a ceramic slurry whose viscosity had been adjusted so as to be higher than that of the above-mentioned ceramic slurry, after which the polyurethane foam thus treated was fired at 1,300° to 1,400°C for about 5 hours. This firing yielded a cylindrical porous ceramic structure having a three-dimensional network structure and the wall 70. The cell 10 constituting this porous ceramic structure had a long and thin shape in which the ratio of the length b in the major axis A-A direction (see Fig. 2) of cell 10 to its length a in the minor axis B-B direction (see Fig. 2), b/a, was about 1.8. Here, the material for the slurry was mixed powder containing magnesium oxide (MgO), alumina ($Al_2O_3$) and silica ($SiO_2$) which forms cordierite structure on firing, or a mixture prepared by heating the aforesaid mixed powder to make the same into cordierite ceramic, pulverizing the cordierite ceramic to obtain synthetic cordierite powder, and stirring and mixing this powder with 5 to 10 wt% of a binder such as methyl cellulose, polyvinyl alcohol or the like, 2 to 3 wt% of a surfactant, a dispersant, etc. and 50 to 100 wt% of water.

As Comparative Example 8, a porous ceramic structure was obtained in exactly the same manner as described above, except that a polyurethane foam having an average cell diameter D of 3.2 mm was used without stretching.

Next, for comparing Example 10 with Comparative Example 8, pressure loss was measured by passing air through each porous ceramic structure in the direction of the cylinder axis. The measurement was carried out at an air flow rate of 3 m³/min to obtain the values of pressure loss shown in Table 2.

Table 2

|  | Example 10 | Comparative Example 8 |
|---|---|---|
| Pressure loss (mmHg) | 4.0 | 9.6 |

As is evident from Table 2, pressure loss could be greatly reduced as compared with the conventional ceramic structure, by employing this invention.

Example 11

In Example 11, there was prepared a cylindrical porous ceramic structure with the geometry: diameter 130 mm, length 80 mm, which had a wall on the utmost periphery. This porous ceramic structure of Example 11 was produced by forming a stretched polyurethane foam having an average cell diameter of 1.7 mm and a degree of stretching of 142% into a cylinder having a diameter of about 130 mm and a length of about 81 mm, in the same manner as in Example 10. The direction of major axis of the cell was made perpendicular to the cylinder axis.

The porous ceramic structure as Example 11 was obtained from the above-mentioned stretched polyurethane foam in exactly the same manner as in Example 10.

In the porous ceramic structure as Example 11, the major axis A-A (see Fig. 2) of oval cells constituting the porous ceramic structure was arranged in a direction perpendicular to the cylinder axis. A dense layer of ceramic was formed on the peripheral portion.

Porous ceramic structures were obtained as Comparative Example 9 and Comparative Example 10, respectively, in exactly the same manner as in Comparative Example 8 by using the following starting materials. In Comparative Example 9, a polyurethane foam having the cell shape shown in Fig. 11 with an average 10, a polyurethane foam having an average cell diameter of 1.3 mm was used. The geometries of these porous ceramic structures also were adjusted as follows: diameter 130 mm, length 80.

Each of these structures was set as a filter in the middle of the exhaust pipe of a diesel engine of 2.2 liters displacement, and its capability of collecting particulates exhausted from the engine was evaluated. The engine conditions were 2,000 r.p.m. x 6 kg•m. The collection percentage η was determined by measuring the degrees of blackening before and behind the filter $K_f$ and $K_r$, respectively, by means of a smoke meter, followed by calculation by the equation:

$$\eta = \frac{K_f - K_r}{K}$$

Pressure loss was determined by measuring the difference between pressures before and behind the filter by means of a mercury manometer. The results obtained are shown in Example 19. As shown in Fig. 19, the collecting efficiency was hardly lowered, but pressure loss was greatly reduced.

Example 12

In Example 12, there was prepared cylindrical porous ceramic structures with the geometry: diameter 100 mm, length 40 mm, which had a wall on the utmost periphery. These porous ceramic structures as Example 12 was obtained by making a polyurethane foam having an average cell diameter of 2 mm into various stretched polyurethane foams with various degrees of stretching, and treating these stretched polyurethane foams in exactly the same manner as in Example 10. The direction of major axis of the cell was made parallel to the cylinder axis. In Example 12, 30 g of activated alumina was adhered to the skeleton of each of these ceramic structures. The coating with activated alumina was conducted in the following manner. A coating liquid was prepared by adding water to a mixture of 10 to 20 wt% of alumina sol, 20 wt% of aluminum nitrate, and the balance of $\gamma$-alumina. The ceramic structures were impregnated with the coating liquid, and the surplus liquid was removed, after which the ceramic structures were dried and then fired under the conditions of 750°C for 1 hour.

Next, a method for supporting a noble metal catalyst on the structure coated with $\gamma$-alumina is explained below. The coated structure was immersed in a 1 to 3 wt% aqueous solution containing chloroplatinic acid ($H_2PtCl_6\bullet6H_2O$) and rhodium chloride ($RhCl_3\bullet3H_2O$) in the ratio of 7:3 by weight, and water was lightly removed from the structure, after which the structure was heat-treated at 700°C for about 10 minutes, whereby 0.2 g in total of Pt-Rh mixed catalyst was supported on the structure.

Each of the catalytic materials produced in the manner described above was attached to the exhaust pipe of a gasoline engine of 2,000 cc displacement, and the concentration of total hydrocarbon (T.H.C.) in exhaust gas was measured. The gas temperature at the inlet to the catalytic material was 400°C. Pressure loss was determined by passing air through the catalytic material at a rate of 3 $m^3$/min.

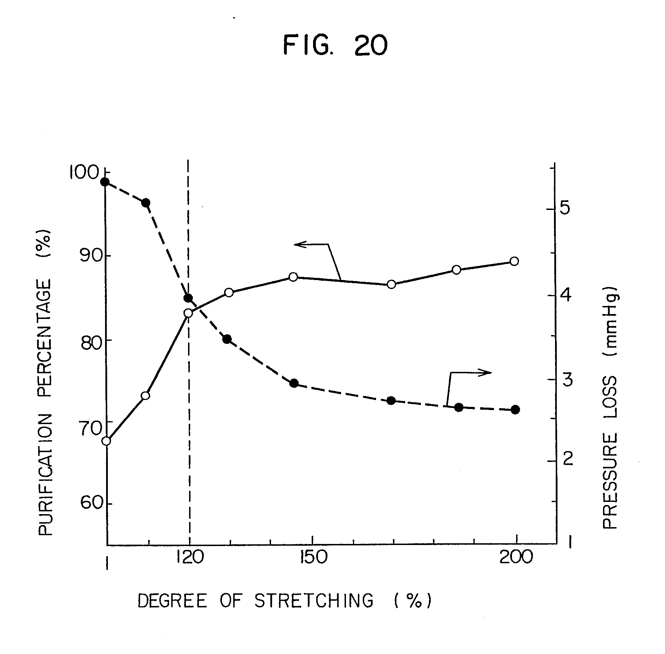

The relationships between the degree of stretching of polyurethane foam and pressure loss, and between said degree of stretching and purification percentage are shown in Fig. 20.

As is obvious from Fig. 20, excellent characteristics could be obtained by this invention with respect to both purifying capability and pressure loss. Particularly when the degree of stretching was 120% or more, these excellent performance characteristics were remarkable. The upper limit of the degree of stretching is a threshold value at which the skeleton of polyurethane foam is broken by stretching. Specifically, the upper limit of the degree of stretching is preferably 220%.

As is evident from Examples above, the porous ceramic structures of the present invention can reduce pressure loss greatly while maintaining the collecting efficiency and the purifying capability substantially at their conventional levels. The reason for this is as follows.

First, in the case where the major axis A-A of cell (see Fig. 2) is substantially parallel to the flow direction of gas, when it is assumed that a gas passes linearly through a catalytic material explained in Example 12 having a length of 40 mm, 20 cells are present in the gas's course in the case of a conventional porous ceramic structure, while only 14 cells are present therein in the case of a porous ceramic structure produced, as in one example of the present invention, from a polyurethane foam having a degree of stretching of 146%. To put it simply, in Fig. 18 and Fig. 11, gas particles are disturbed 20 times by skeletons 21a substantially perpendicular to gas flow in the case of a conventional porous ceramic structure, while they are disturbed 14 times by skeletons 11a in one example of the present invention. That is to say, this indicates that the disturbance of gas in the case of conventional skeletons is reduced in one example of the present invention. From the fact that pressure loss is caused by inertia force and viscosity which hinder gas, it is natural that reduction of the disturbance of gas should result in reduction of inertia force and hence reduction of pressure loss.

On the other hand, the reason for the maintenance of the purifying capability is that in Fig. 18, the proportion of gas flow along skeleton 11b parallel to gas flow is increased. In other words, in the case of a conventional ceramic structure, a large number of skeletons 21a substantially perpendicular to gas flow exist, so that gas is disturbed, resulting in high probability of the contact of gas with skeletons 21a and 21b in the lower course of gas flow. In one example of the present invention, although gas is not so greatly disturbed as in the case of a conventional porous ceramic structure, skeletons 11b which are dimensionally long in the flow direction of gas are pressed in the gas's course, so that the probability of the contact of gas with skeletons 11b is increased, and after all, the purifying capability is maintained in total.

That is to say, in the case of a conventional porous ceramic structure, the attainment of a certain level of purifying capability is accompanied by excessive disturbance of gas, resulting in so much the greater disadvantage in pressure loss.

This relation applies also to the filter of Example 11. Since the probability of the collision of gas with the skeletons is maintained in total, the collecting efficiency is maintained at its conventional level.

The porous ceramic structure has excellent effects also when it is used as a filter or the like by making the major axis A-A of cell (see Fig. 2) substantially perpendicular to the flow direction of gas. In this case, when it is assumed that a gas moves forward linearly as shown in Fig. 18 (6), the number of ceramic skeletons in a plane perpendicular to the gas flow is small in the case where the number of ceramic skeletons 11b perpendicular to the gas flow is the same as that of skeletons 21a perpendicular to the gas flow of a conventional ceramic structure. Consequently, the collecting efficiency is slightly lowered, but the reducing effect on pressure loss becomes more remarkable and an excellent filter can be obtained.

Example 13

Fig. 3 shows a porous ceramic structure 50 produced according to an embodiment of the present invention. The porous ceramic structure 50 had a cylindrical shape with the geometry: diameter 107 mm, length 80 mm. The porous ceramic structure was composed of a porous portion 60 and a wall 70. The porous portion 60 had a cell structure with a three-dimensional network skeleton having internal communicating spaces. Individual cells 10 of the cell structure had a long and thin shape as shown in Fig. 2, and the three-dimensional network skeleton 11 constituted the edge of the polyhedron. The internal communicating spaces are shown by a symbol 12.

In the porous portion 60 of the porous ceramic structure 50, the axis A-A (see Fig. 2) of cells 10 constituting the porous portion 60 coincided with the cylinder axis. The material for the ceramic was cordierite ceramic. The wall 70 was formed in the form of a dense layer on the utmost periphery of the porous ceramic structure 50 by use of the cordierite ceramic.

The ratio of the length b in the major axis A-A direction to the length a in the minor axis B-B direction of the polyhedron of cell 10, b/a, was 3 on the average, and the length b was about 10 mm on the average.

Next, a process for producing said ceramic structure is explained below.

There was prepared a bulk of polyurethane foam which was a resin foam having communicating pores free from cell wall. This bulk was sliced into a plate of 10 mm in thickness with a cutter or the like. Both ends of the polyurethane foam plate of 10 mm in thickness were placed in a chuck, after which the plate was heat-treated in a unidirectionally stretched state. The polyurethane foam used herein had an average cell diameter of 5.5 mm. The conditions for the above-mentioned heat treatment were 160°C for 60 minutes. The degree of stretching of the polyurethane foam plate obtained by the heat treatment was about 50%, and its cell had a shape similar to that shown in Fig. 2, in which the ratio of average major axis b to average minor axis a, b/a, was 3.0 on the average, and the length of the major axis b was 10 mm on the average.

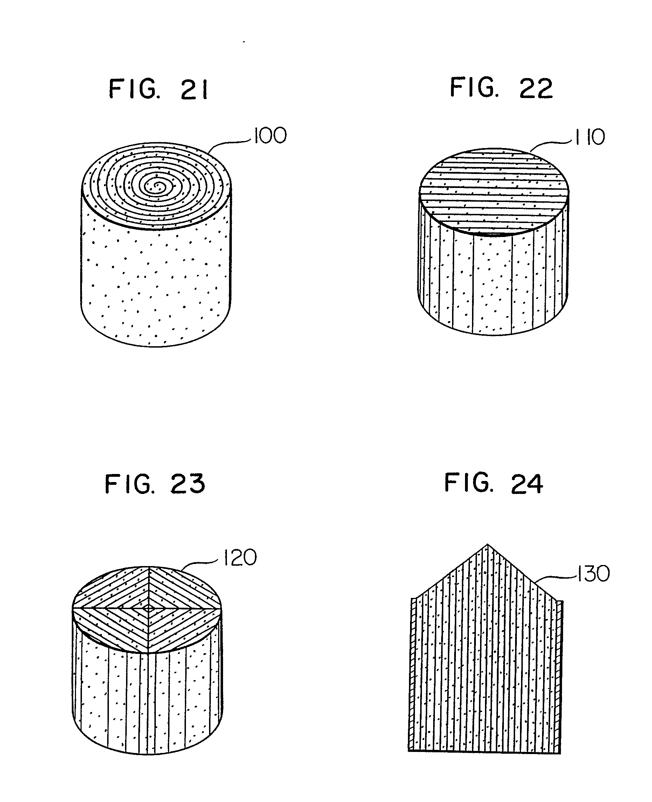

The polyurethane foam plate obtained in the manner described above was cut down to a length in the stretching direction of 80 mm with a cutter or the like, and the polyurethane foam plate of 80 mm in width thus obtained was rolled spirally as shown in Fig. 21. The end of this polyurethane foam plate was fixed with a urethane resin adhesive to form a cylindrical matrix 100 of about 107 mm in diameter and 80 mm in length having a three-dimensional network skeleton. The direction of major axis of the cell coincided with that of the cylinder axis.

Next, the matrix 100 was impregnated with a ceramic slurry, and the surplus slurry was removed by means of an air gun or a centrifuge, after which the matrix 100 was dried at 50° to 80°C to adhere thereto the ceramic slurry. Then, the outer periphery of the matrix 100 was coated with a ceramic slurry whose viscosity was adjusted so as to be higher than that of the ceramic slurry infiltrated into the matrix. The matrix 100 thus treated was fired at 1,000° to 1,400°C for 17 hours to obtain a cylindrical porous ceramic structure having a three-dimensional structure and the wall 70. Here, the material for the slurry infiltrated into the matrix was mixed powder containing magnesium oxide (MgO), alumina ($Al_2O_3$) and silica ($SiO_2$) which forms cordierite on sintering, or a mixture prepared by firing the aforesaid mixed powder to make the same into cordierite ceramic, pulverizing the cordierite ceramic to obtain synthetic cordierite powder, and stirring and mixing this powder with 5 to 10 wt% of a binder such as methyl cellulose, polyvinyl alcohol or the like, 2 to 3 wt% of a surfactant, dispersant, etc. and 50 to 100 wt% of water. The slurry used in the wall 70 was composed of substantially the same components as described above.

As Comparative Example 11 in exactly the same manner as described above, there was produced a porous ceramic structure having a conventional structure in which cells constituting the porous ceramic structure had not been formed into long and thin shape. The geometry of this Comparative Example 11 was the same as that of Example 13 as follows: diameter 107 mm, length 80 mm. Its average cell diameter was 5.5 mm.

Next, for comparison between Example 13 and Comparative Example 11, pressure loss was measured by passing air through these porous ceramic structures in the direction of cylinder axis.

The measurement was carried out at an air flow rate of 3 $m^3$/min to find that pressure loss in Examples 13 was 4.5 mmHg and that of Comparative Example 11 was 5.9 mmHg.

As is evident from this fact, the porous ceramic structure obtained by an example of the present invention could reduce pressure loss as compared with the conventional porous ceramic structure.

Example 14

Although in Exmaple 13, a cylindrical matrix was formed by rolling a polyurethane foam plate, a porous ceramic structure was produced in Example 14 in the following manner. First, as shown in Fig. 22 and Fig. 23, a stretched polyurethane foam was cut down to a length in the stretching direction of 80 mm and then cut into suitable lengths in a direction perpendicular to the stretching direction. The polyurethane foam plates thus obtained were placed one upon another to produce a cylindrical matrix 110 or 120. A porous ceramic structure was obtained in exactly the same manner as in Example 13, except that the cylindrical matrix 110 ro 120 was used. This porous ceramic structure was also composed of cells having the same long and thin shape as in Example 14, and could reduce pressure loss with retention of the purifying capability as compared with conventional porous ceramic structures.

Although a polyurethane foam was used as a resin foam in the above Example, the present invention is not limited thereto and there may also be used various thermoplastic foams and thermosetting foam such as polyvinyl chloride foams, polyethylene foams, etc.

Although in Example 13, the polyurethane foam was fixed with a urethane resin adhesive in order to form the polyurethane foam plate into a matrix shape, a means for the formation into a matrix is not limited to the fixing means using an adhesive, and any means may be used so long as it permits formation of a matrix. For example, it is also possible to wind wire, a sheet or the like on the periphery of a matrix.

Although in Examples 13 and 14, the shapes of the porous ceramic structures were cylindrical, the shape of the porous ceramic structure of the present invention is not limited to cylindrical shape but may be any shape, for example, polygonal prisms such as elliptic cylinder, tetragonal prism, hexagonal prism, etc. which are formed by laminating by rolling a resin foam plate or placing resin foam plates one upon another; and cylindrical shapes having a projecting central portion. Moreover, this invention permits easy formation of a porous ceramic structure in any of these various shapes.

Example 15

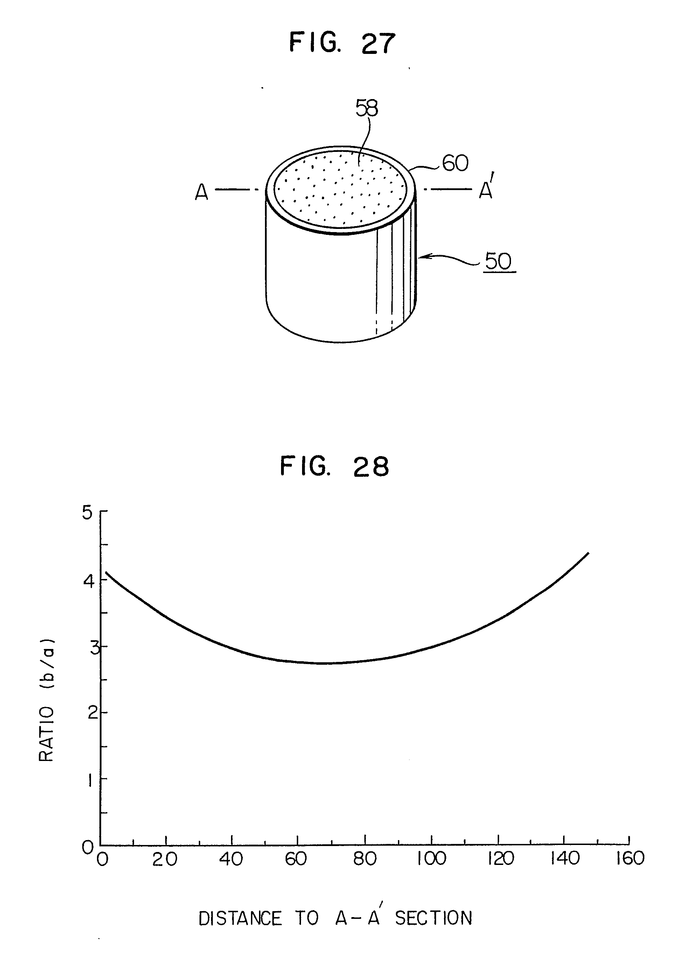

As a porous ceramic structure 50 of an embodiment of the present invention, there was prepared a porous ceramic structure of elliptic cylinder shape having the geometry: major axis 146 mm, minor axis 75 mm, length 143 mm. A perspective view of this porous ceramic structure is shown in Fig. 27. The apparent ceramic density in the porous portion 58 was 0.2 to 0.3 g/cm$^3$. The outer periphery of the ceramic structure 50 had a dense ceramic layer of 2 mm in thickness as a reinforcing layer 60. The porous portion 58 was composed of a porous ceramic having such a long and thin cell structure as shown in Fig. 2, and the ratio of major axis b to average minor axis a, b/a, increased, as shown in Fig. 28, from about 2.7 with an increase of the distance from the center of the porous portion 58 in the direction of the periphery, and reached about 4 on the outer periphery of the porous portion 58.

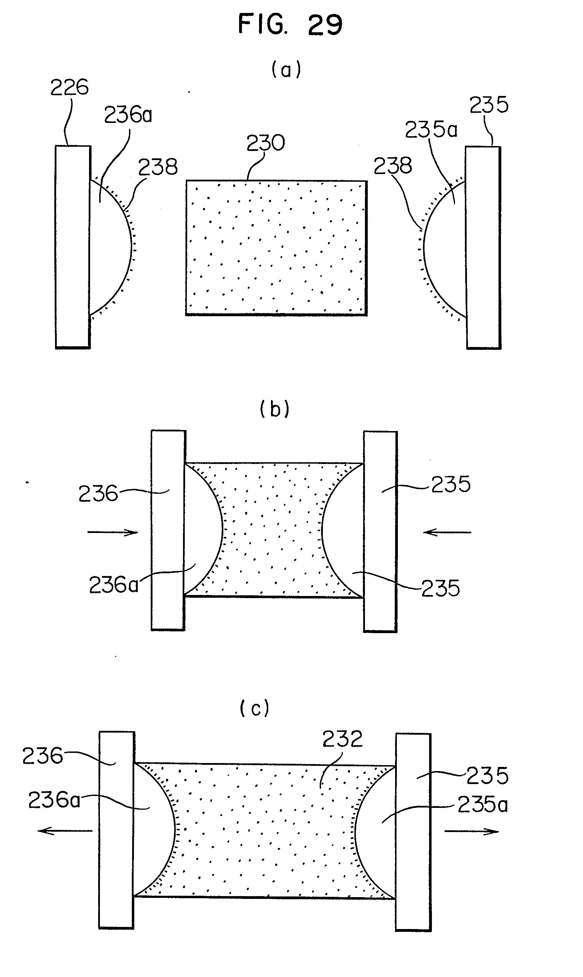

Next, a process for producing the porous ceramic structure of the present invention is explained below with reference to Fig. 29.

A polyurethane foam was obtained by foaming by a conventional method, after which the cell walls were removed to prepare a polyurethane foam 230 which was a resin foam having a cell structure wherein cell had been allowed to communicate with one another. Then, as shown in Fig. 29 (a), the polyurethane foam was placed between stretchers 235 and 236 having, on one side, a convex portion 235a or 236a, respectively. The convex portions 235a and 236a of the stretchers 235 and 236 were coated with an adhesive 238 which could adhere to the polyurethane foam sufficiently strongly and could interlock even at 100° C or lower. As shown in Fig. 29 (b), the convex portions 235a and 236a of the stretchers 235 and 236 were pressed against both ends of the polyurethane foam 230, and in this state, the adhesive adhered to the convex portions 235a and 236a was cured. Then, as shown in Fig. 29 (c), the stretchers 235 and 236 were pulled in the respective opposite directions, whereby the percentage of stretch of the central portion of the polyurethane foam 230 can be made low, while that of the peripheral portion can be made high. In this stretched state, the polyurethane foam 230 was held in an oven having a temperature of about 100° to 150° C for about 30 to about 90 minutes, whereby a polyurethane foam having a stretched cell structure could be obtained. The polyurethane foam was taken out from the stretchers 235 and 236 by cutting both ends of the polyurethane foam with a knife or the like.

The polyurethane foam thus obtained was formed into an elliptic cylinder of about 143 mm in length having a cross-section shape with a minor axis of 75 mm and a major axis of 146 mm. The direction of the major axis of its cell was allowed to coincide with that of the cylinder axis.

Next, the polyurethane foam was impregnated with a ceramic slurry, and the surplus slurry was removed by means of an air gun or a centrifuge, after which the polyurethane foam was dried at 50° to 80° C. Further a ceramic slurry having a viscosity higher than that of the aforesaid slurry was coated on the utmost periphery of the polyurethane foam, and thin dried. The polyurethane foam thus treated was fired at 1,000° to 1,300° C for about 7 hours to obtain a porous ceramic structure having a three-dimensional network structure. Here, the material for the slurries was mixed powder containing magnesium oxide (MgO), alumina (Al$_2$O$_3$) and silica (SiO$_2$) which forms cordierite on sintering, or a mixture prepared by heating the aforesaid mixed powder to make the same into cordierite ceramic, pulverizing the cordierite ceramic to obtain synthetic cordierite powder, and stirring and mixing this powder with 5 to 10 wt% of a binder such as methyl cellulose, polyvinyl alcohol or the like, 2 to 3 wt% of a surfactant, dispersant, etc. and 50 to 100 wt% of water.

Further, for example, γ-Al$_2$O$_3$ having a specific surface area of 10 m$^2$/g or more was adhered to the skeleton surface of the porous ceramic structure obtained by the above mentioned production process, in an amount of 100 to 200 g per liter of foam-like ceramic. Then, a noble metal such as platinum, rhodium, ruthenium or the like was adhered thereto to obtain a catalyst carrier for purification which was a porous ceramic structure having a reinforcing layer on the utmost periphery.

As Comparative Example 12, there was prepared a porous ceramic structure which had a ceramic density of 0.2 g/cc in the whole porous portion and a cell structure (substantially spherical, conventional cells) wherein the minor axis was about 5 mm and the ratio of major axis b to minor axis a, b/a, was about 1.3. As Comparative Example 13, a conventional monolithic carrier having a cell diameter of about 1.3 mm was prepared.

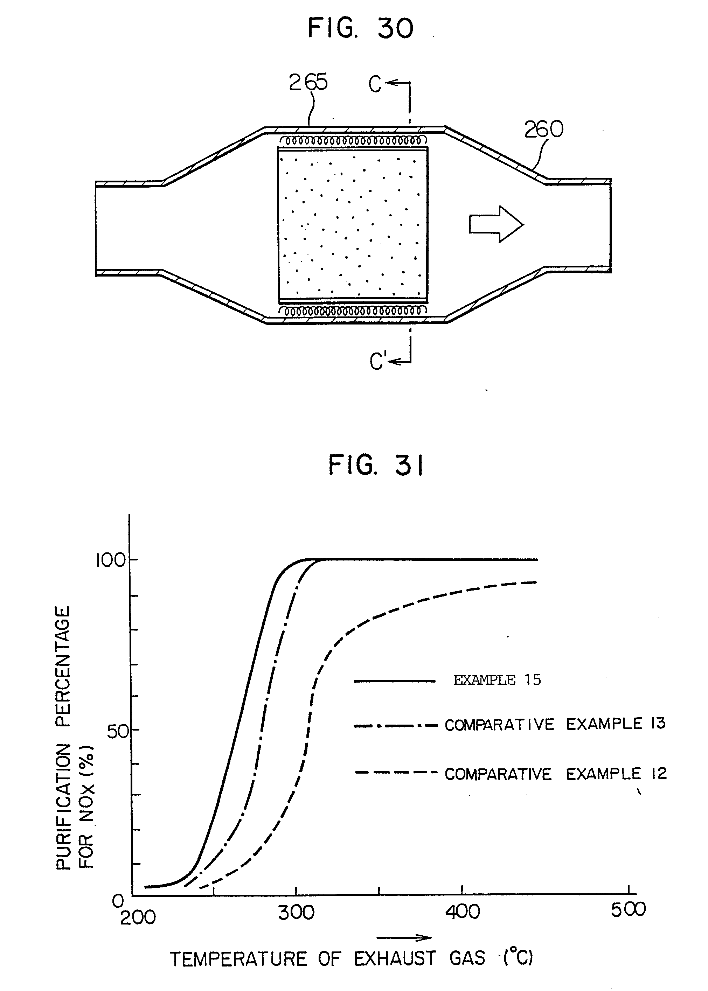

A comparative experiment was described below with reference to Fig. 30. First, each porous ceramic structure was formed into a shape having a cubic volume of about 1,300 cc, a length of 143 mm and a cross-section shape with a minor axis of 75 mm and a major axis of 146 mm. Each porous ceramic structure thus formed was set in an exhaust pipe 260 by means of nets 265 for holding ceramic structure.

Then, the relationship between the temperature of exhaust gas and the purification percentage for nitrogen oxides was investigated by cooling exhaust gas under the conditions of 2,800 r.p.m. - 360 mmHg in a 2,000 cc internal combustion engine. The results obtained are shown in Fig. 31. As is obvious from Fig. 31, the porous ceramic structure of the prepared embodiment could maintain the purification percentage for nitrogen oxides even at a low exhaust gas temperature as compared with Comparative Examples 12 and 13. Moreover, it showed a greatly improved purification percentage as compared with Comparative Example 12.

This indicates that in the porous ceramic structure according to present embodiment, the whole catalyst carrier was effectively utilized.

In addition, pressure loss was measured by passing air through each porous ceramic structure at a flow rate of 3 $m^3$/min, to find that porous ceramic structure of the present embodiment could reduce pressure loss greatly: in this structure pressure loss was 13 mmHg, while it is 22 mmHg in Comparative Example 12.

Although, in the above Example, a porous ceramic structure having a oval cross-section shape was subjected to the experiment, the same results as described above can, of course, be obtained for other shapes, and the porous ceramic structure of the present invention may also have a cylindrical shape, a tetragonal prism shape, a hexagonal prism shape, etc.

Although in the above Example, cordierite was used as a material for the porous ceramic structure, the material is not limited thereto in the present invention and there can also be used alumina, mullite, β-spodumene, silicon nitride, silicon carbide, etc.

Although in the above Example, the ratio of average major axis b to average minor axis a, b/a, of the cell structure of the porous portion was minimum in the central portion and was increased continuously with an increase of the distance from the central portion in the direction of the periphery, the same results as in the above Example can be obtained also when the ratio b/a is varied stepwise as shown in Fig. 9.

Although in the above Example, the porous ceramic structure was used as a catalyst carrier for purifying exhaust gas from internal combustion engine, it can bring about the same effects as in the above Example also when used as a collector for diesel particulates exhausted from a diesel engine.

Examples 16 to 19

As an organic foam structure of Example 16 of the present invention, cylindrical organic foam structures were prepared having the geometry: diameter 100 mm, length 40 mm or 60 mm. The major axis B-B (see Fig. 2) was allowed to coincide with the cylinder axis.

The ratio of the length b in the major axis B-B direction to the length a in the minor axis A-A direction, b/a, of the polyhedron was about 2.4 on the average.

Next, a process for producing these network organic foam filters (hereinafter referred to as "foam filter") is described below.

First, a bulk of polyurethane foam having communicating pores free from cell walls was prepared. The polyurethane foam used herein had an average minor axis a (see Fig. 36) of about 2 mm. The opposite ends of the bulk foam were fixed by means of stretchers, and the bulk foam was stretched by 30% in terms of percentage of stretch by use of the stretchers. The term "percentage of stretch" used herein means the percentage of the length after stretching based on the original length. In this case, the stretching of the bulk foam results in stretching of individual cells and shrinkage thereof in a direction perpendicular to the stretching direction, so that long and thin cells are formed. When the same starting material is used, the percentage of stretch and the ratio b/a correspond to each other, for example, the ratio b/a is about 2.4 at a percentage of stretch of about 50%. Therefore, for convenience, the following description is given using the term "the percentage of stretch of bulk foam" in place of the term "the ratio of cell diameters, b/a".

Next, the bulk foam stretched by the stretchers, was placed, in this stretched state, in a warm-air dryer at about 160°C and the whole thereof was uniformly heated. The bulk foam placed in an atmosphere at 160°C, in the stretched state was further stretched little by little and finally, stretched until the percentage of stretch reached 85%. The bulk foam was kept in this state for 10 minutes, and the temperature was returned to ordinary temperature. Then, the bulk foam was released from the stretchers. This release restored the stretched foam to its somewhat less stretched state, and when the temperature of the bulk foam returned to ordinary temperature completely and the restoration stopped, there was obtained a foam filter of the present invention having a percentage of stretch of about 50% (in the present example, the ratio b/a was about 2.4).

The apparent density of the foam filter obtained according to the present invention was substantially the same as that of the bulk foam before the stretching of 0.03 g/$cm^3$. This indicates that the porosities of the foam before and after the stretching were substantially the same.

From thus produced foam filter in which cells had been stretched into a long and thin shape, two cylindrical pieces having a diameter of about 110 mm and a length of 40 mm or 60 mm, respectively, were cut out. The major axis B-B axis direction (see Fig. 2) of the cell was allowed to coincide with the direction of cylinder axis.

Pressure loss was measured for each piece of foam filter by passing air therethrough at a rate of 3 $m^3$/min in the direction of the cylinder axis. The measurement was carried out while preventing air from flowing from the side to the cylinder. The results obtained are shown in Table 3.

## Table 3

| Length of foam filter (mm) | Percentage of stretch (%) | Pressure loss (mmHg) |
|---|---|---|
| 40 | 0 | 3.2 |
| 40 | 50 | 2.2 |
| 60 | 0 | 4.3 |
| 60 | 50 | 2.8 |

From Table 3, it is apparent that pressure loss can be greatly reduced by employing the present invention.

Although in Example 16 above, there was formed a foam filter having a percentage of stretch of 50%, that is, the ratio of major axis b to minor axis a, b/a, was 2.4, optional variation of the ratio b/a, namely, optimal variation of the percentage of stretch can be achieved by varying the degree of stretching of the bulk foam, or by varying the heating and holding time in a warm-air dryer after stretching to a predetermined degree.

The case where the percentage of stretch was varied was described below as Example 17. Fig. 34 shows the relationships between pressure loss and the percentage of stretch of foam filters of the present invention having a diameter of about 110 mm and a length $\ell$ of 40 mm, 60 mm or 80 mm, respectively, obtained by use of a bulk foam having an average minor axis a (see Fig. 36) of about 2 mm. In this Example 17, pressure loss was measured in exactly the same manner as in Example 16 above by passing air through each foam filter at a rate of 3 m³/min in the direction of the cylinder axis. The measurement was carried out while preventing air from flowing from the side to the cylinder. Here, a foam filter having a percentage of stretch of 0% corresponds to a conventional one. As is obvious from Fig. 34, a great reducing effect on pressure loss could be obtained as compared with the conventional foam filter, by making the cell structure long and thin.

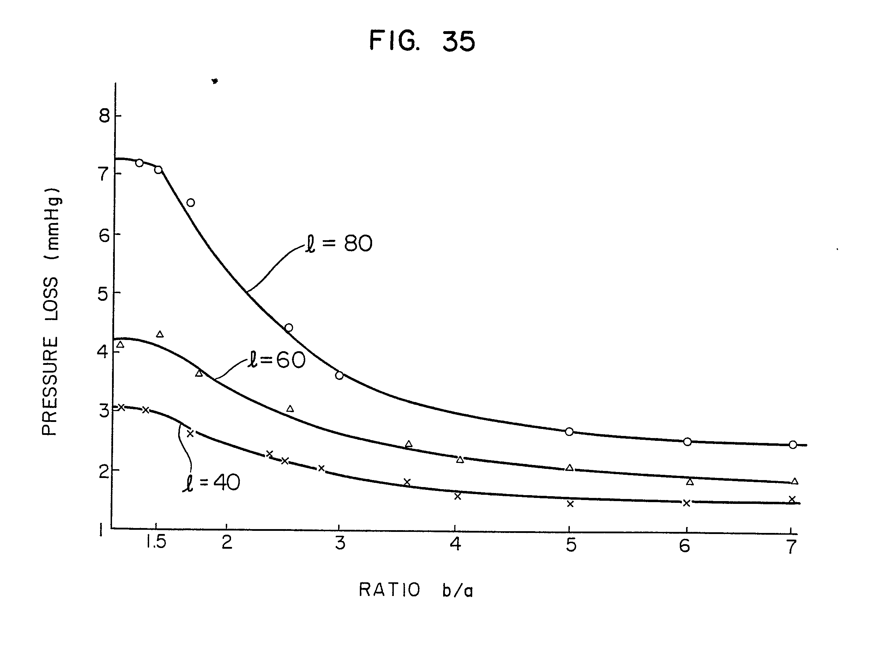

As Example 18, in Fig. 35 are shown the results of measuring the relationship between pressure loss and the ratio of average major axis b to average minor axis a, b/a in Fig. 2, for each of cylindrical foam filters having a diameter of about 110 mm and a length of 40 mm, 60 mm or 80 mm, respectively. Pressure loss was measured by exactly the same method as described above. From Fig. 36, it can be seen that when the ratio b/a is less than 1.5, the cells, like conventional cells, have a substantially spherical shape, so that no reducing effect on pressure loss can be expected, while when the ratio b/a is more than 6, the interstices between skeleton in the flow direction of a fluid is narrowed, so that it becomes difficult to obtain a still larger reducing effect on pressure loss. In brief, for practical purposes, the ratio of average major axis b to average minor axis ab, b/a, is preferably 1.5 to 6.

Although in the above Examples, the apparent density of the foam filters of embodiments of the present invention was substantially the same as that of conventional foams, a foam filter having a density lower than that of conventional foam filters can be obtained by depressing shrinkage in a direction perpendicular to the stretching direction in stretching a bulk foam.

One example thereof is described below as Example 19. In Example 19, a foam filter of an embodiment of the present invention having a percentage of stretch of 60% and an apparent density of 0.024 g/cm³ could be obtained by depressing shrinkage in a direction perpendicular to the stretching direction in stretching a bulk foam having an apparent density of 0.03 g/cm³.

Although in the above Examples, the foam of the present invention was produced from a polyurethane foam having an average minor axis a of cell (see Fig. 36) of about 2 mm, a foam filter produced from a polyurethane foam having an average minor axis a (see Fig. 36) of, for example, about 3.2 mm also can bring about the same result as in Examples above.

Although in the above Examples, a bulk foam was stretched by heat treatment, a foam filter can be obtained by coating or curing the resin itself of the skeleton of cell by treatment with a chemical agent such as cyanoacrylate, polyester or the like.

As described above in detail, embodiments of the present invention makes it possible to reduce pressure loss while maintaining various performance characteristics substantially at their conventional levels.

Furthermore, in embodiments of the present invention, a resin foam in the form of a thin plate can be stretched easily and uniformly as compared with stretching a large cylindrical resin foam. Since one or more thin plates of resin foam are laminated by rolling the thin plate or placing the thin plates one upon another, the shape of cells constituting a porous ceramic structure can easily be changed depending on purpose of use, and the ratio of average major axis b to average minor axis a, b/a, also can easily be varied.

Moreover, prevention of pressure loss of a gas passing through the porous ceramic structure and improvement of the purification percentage could be achieved by adjusting the cell structure constituting said porous ceramic structure so that the rate of average major axis b to average minor axis a, b/a, of cells was 1.5 or more, was small in the central portion of the porous portion, and was increased with an increase of the distance from the central portion in the direction of the periphery.

The disclosed examples provide an easier process for producing a porous ceramic structure having cells of a long and thin shape which causes only a slight pressure loss.

They also provide a porous ceramic structure which has an improved purifying capability and causes only a relatively small pressure loss.

The above examples allow the pressure loss to be greatly reduced in an organic foam filter without deteriorating the function as a filter.

In the disclosed examples, individual cells of a cell structure constituting a porous ceramic structure or filter are formed into a long and thin shape, and when the average major axis of said long and thin cell is taken as b and its average minor axis as b, the ratio b/a is adjusted to al least 1.5. Furthermore, a porous ceramic structure is produced using a stretched resin foam having a degree of stretching of 120% or more, and individual cells of the porous ceramic structure are formed into a long and thin shape.

## Claims

1. A porous ceramic structure having a cell structure with a three-dimensional network skeleton having internal communicating spaces, in which the individual cells of said cell structure constituting said structure have a long and thin shape and the ratio b/a of the average major axis b to the average minor axis a of said cell is at least 1.5.

2. A porous ceramic structure according to Claim 1, wherein the average minor axis of said cell is 0.5 to 2 mm and said ratio b/a of said average major axis b to said average minor axis a, is from 1.5 to 6.

3. A porous ceramic structure according to Claim 2, which is used as a particulates-collecting filter for a diesel engine by placing in exhaust gas so that the minor axis of said cell is substantially parallel to the flow direction of exhaust gas.

4. A porous ceramic structure according to Claim 2, wherein a catalytic substance is coated on the surface of said three-dimensional network skeleton, and the porous ceramic structure is used as a catalytic material for purifying exhaust gas from engines, by placing in exaust gas so that the major axis of said cell is substantially parallel to the flow direction of exhaust gas.

5. A porous ceramic structure according to any one of the preceding claims, which is obtained by adhering and sintering said ceramic slurry in excess to at least a part of said porous ceramic.

6. A porous ceramic structure having a cell structure with a three-dimensional network skeleton having internal communicating spaces, obtained by adhering a ceramic slurry to the surface of skeleton of a resin foam which is air-permeable and which can be burnt down by combustion, sintering said slurry into a ceramic layer at a high temperature, and simultaneously burning down the skeleton of said resin foam, said resin foam being a stretched resin foam of long and thin shape having a degree of stretching of 120% or more.

7. A porous ceramic structure according to Claim 6, wherein the average cell diameter of said resin foam before stretching is 0.5 to 7 mm.

8. A porous ceramic structure according to Claim 6 or 7, which is used as a particulates-collecting filter for a diesel engine by placing in exhaust gas so that the major axis of said cell is substantially perpendicular to the flow direction of exhaust gas.

9. A porous ceramic structure according to Claim 6 or 7, wherein a catalytic substance is coated on the surface of said three-dimensional network skeleton and the porous ceramic structure is used as a carrier for purifying exhaust gas from engines, by placing in exhaust gas so that the major axis of said cell is substantially parallel to the flow direction of exhaust gas.

10. A porous ceramic structure having a cell structure with a three-dimensional network skeleton having internal communicating spaces, wherein individual cells of said cell structure have a long and thin shape, and the porous ceramic structure is made up so that the ratio b/a of the average major axis b to the average minor axis a, of said cell is larger in a peripheral portion of the section of said structure than in a central portion.

11. A porous ceramic structure according to Claim 10, wherein the ratio b/a of the average major axis b to the average minor axis of said cell is at least 1.5.

12. A porous organic structure having a cell structure with a three-dimensional network skelton having internal communicating spaces, wherein individual cells of said cell structure constituting said organic foam have a long and thin shape, and the ratio b/a of the average major axis b to the average minor axis a of said cell is at least 1.5.

13. A process for producing a porous ceramic structure which comprises the steps of:
stretching an air-permeable resin foam in one direction with a degree of stretching of 120% or more to obtain a stretched resin foam having a long and thin cell shape,

adhering a ceramic slurry to the surface of skeleton of said stretched resin foam, and

firing said stretched resin foam to sinter said ceramic slurry into a ceramic layer and burn down the skeleton of said stretched resin foam.

14. A process for producing a porous ceramic structure according to Claim 13, wherein said degree of stretching is from 120 to 220%.

15. A process for producing a ceramic structure, which comprises

forming a resin foam into a plate,

stretching the plate of resin foam in one direction,

laminating the stretched resin foam plate to form a matrix having a three-dimensional network skeleton,

adhering a ceramic slurry to the surface of the matrix,

sintering said ceramic slurry and simultaneously burning down the skeleton of said matrix, and

thereby imparting, to cells constituting the ceramic structure, a long and thin shape having a ratio of the average major axis b to the average minor axis a, b/a, of at least 1.5.

16. A process for producing a ceramic structure according to Claim 15, wherein said matrix is obtained by rolling said plate of resin foam to laminate the same.

17. A process for producing a ceramic structure according to Claim 15, wherein said matrix is obtained by placing said plates of resin foam one upon another to laminate the same.

21

0254557

## FIG. 1

x 1.0

## FIG. 9 PRIOR ART

x 1.0

0254557

FIG. 2

FIG. 3

FIG. 4

0254557

# FIG. 5

# FIG. 6

O --- PRESENT INVENTION
X --- CONVENTIONAL STRUCTURE

COLLECTION PERCENTAGE (%)

PRESSURE LOSS (mmHg)

TIME (hr)

0254557

## FIG. 7

## FIG. 8

## FIG. IO
## PRIOR ART

## FIG. II
## PRIOR ART

0254557

## FIG. 12

### (a)

### (b)

0254557

FIG. 13

0254557

## FIG. 14

0254557

## FIG. 15

## FIG. 16

FIG. 17

0254557

0254557

## FIG. 18

(a)

(b)

## FIG. 19

○ --- EXAMPLE
△ --- COMPARATIVE EXAMPLE 8
● --- COMPARATIVE EXAMPLE 9

TIME (hr)

0254557

FIG. 20

0254557

FIG. 21

100

FIG. 22

110

FIG. 23

120

FIG. 24

130

0254557

## FIG. 25

## FIG. 26

RATIO  b/a

0254557

## FIG. 27

## FIG. 28

DISTANCE TO A-A' SECTION

0254557

## FIG. 29

(a)

(b)

(c)

0254557

## FIG. 30

265    C

260

C'

## FIG. 31

PURIFICATION PERCENTAGE FOR NOx (%)

100

50

0

EXAMPLE 15

COMPARATIVE EXAMPLE 13

COMPARATIVE EXAMPLE 12

200    300    400    500

TEMPERATURE OF EXHAUST GAS (°C)

0254557

FIG. 32

0254557

## FIG. 33

⬇ GAS

330

332

⬇

## FIG. 34

PERCENTAGE OF STRETCH (%)

FIG. 35

0254557

## FIG. 36 PRIOR ART

## FIG. 37 PRIOR ART

0254557

# FIG. 38

## (a)

501
502

## (b)

521
501
521
502
521
521